(19) **Europäisches Patentamt**
**European Patent Office**
**Office européen des brevets**

(11) **EP 3 263 332 B1**

(12) **EUROPEAN PATENT SPECIFICATION**

(45) Date of publication and mention
of the grant of the patent:
**08.06.2022 Bulletin 2022/23**

(21) Application number: **16755536.6**

(22) Date of filing: **24.02.2016**

(51) International Patent Classification (IPC):
**C08J 5/04** *(2006.01)* **B29C 70/46** *(2006.01)*
**B29K 101/10** *(2006.01)* **B29K 105/08** *(2006.01)*
**B29L 9/00** *(2006.01)*

(52) Cooperative Patent Classification (CPC):
**B29C 70/465; C08J 5/04**

(86) International application number:
**PCT/JP2016/055387**

(87) International publication number:
**WO 2016/136792 (01.09.2016 Gazette 2016/35)**

(54) **RESIN SUPPLY MATERIAL, PREFORM, AND METHOD FOR PRODUCING FIBER-REINFORCED RESIN**

HARZZUFÜHRMATERIAL, VORFORM UND VERFAHREN ZUR HERSTELLUNG EINES FASERVERSTÄRKTEN HARZES

MATÉRIAU DE FOURNITURE DE RÉSINE, PRÉFORME, ET PROCÉDÉ DE FABRICATION DE RÉSINE RENFORCÉE PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2015 JP 2015037930**
**27.02.2015 JP 2015038129**

(43) Date of publication of application:
**03.01.2018 Bulletin 2018/01**

(73) Proprietor: **Toray Industries, Inc.**
**Tokyo 103-8666 (JP)**

(72) Inventors:
• **TAKEHARA, Tomohiro**
**Iyo-gun**
**Ehime 791-3193 (JP)**
• **SEIKE, Satoshi**
**Nagoya-shi**
**Aichi 455-8502 (JP)**
• **HONMA, Masato**
**Iyo-gun**
**Ehime 791-3193 (JP)**

• **MATSUO, Satomi**
**Iyo-gun**
**Ehime 791-3193 (JP)**

(74) Representative: **Prüfer & Partner mbB**
**Patentanwälte · Rechtsanwälte**
**Sohnckestraße 12**
**81479 München (DE)**

(56) References cited:
**EP-A1- 2 674 447**       **EP-A1- 2 990 185**
**WO-A1-2014/103658**   **JP-A- H07 223 271**
**JP-A- 2014 095 034**     **JP-A- 2014 148 111**
**JP-A- 2014 148 111**

• **Flake C. Campbell: "Resin Film Infusion" In: "MANUFACTURING PROCESSES FOR ADVANCED COMPOSITES", 1 January 2004 (2004-01-01), ELSEVIER ADVANCED TECHNOLOGY, OXFORD, GB, XP055486563, ISBN: 978-1-85617-415-2 pages 341-348, * the whole document ***

EP 3 263 332 B1

**Description**

TECHNICAL FIELD

The present invention relates to a resin supply material, a preform, and a method for producing a fiber-reinforced resin.

BACKGROUND ART

Fiber-reinforced resins have an excellent specific strength and specific rigidity, and are therefore widely used in applications such as aircrafts, automobiles and sports. Particularly in industrial applications such as automobiles and sports, demand for high-speed molding processes for fiber-reinforced resins is growing.

Methods for high-speed molding of a fiber-reinforced resin include a RTM (resin transfer molding) method (Patent Document 1) and a RFI (resin film infusion) method (Patent Document 2). In the RTM method, first a dry base material (reinforcing fiber base material which does not contain a resin) is formed into a predetermined shape to produce a preform, the preform is disposed in a metal mold, and a liquid thermosetting resin having a low viscosity is injected into the metal mold, and heated and cured to mold a FRP (fiber-reinforced plastic) member. Since a dry base material is used, a three-dimensional complicated shape can be formed.

In the RTM method, however, a process for injection of a resin is necessary, and therefore molding subsidiary materials to be used in the injection process, such as tubes and pipes, are required. In addition, all the resin is not consumed for production of a molded article, and a large amount of the resin is wastefully left in an injection channel etc., resulting in an increase in cost. In the case of a thermosetting resin, the resin cannot be reused, and cleaning in each batch requires lots of labor, resulting in an increase in cost. The RTM method also has the disadvantage that an injection port or a suction port leaves its trace on a molded member. Moreover, the RTM method has the problem that an operation site is often contaminated by a resin leaked out from a container or a pipe because a resin that is liquid at room temperature is used.

In the RFI method, a reinforcing fiber base material, and a resin film composed of an uncured thermosetting resin are disposed in a mold, and the resin film is melted by heating to be impregnated into the reinforcing fiber base material, and is then cured. Unlike the RTM method, the RFI method does not involve a thermosetting resin that is liquid at room temperature. Therefore, in the RFI method, an operation site is rarely contaminated, and time and labor for resin formulation etc. can be saved. However, the RFI method has the problem that a thermosetting resin to be used in the RFI method has low rigidity in the form of a film, and is therefore poor in handling characteristic, so that lots of time and labor are required for disposing the film in a mold, etc.

Patent documents 3 and 4 each suggest a method for molding a fiber-reinforced resin using an impregnated body (described as a resin support in Patent Document 3 or a preform in Patent Document 4) in which a thermosetting resin that is liquid at room temperature is absorbed into a support. Patent Document 5 suggests a method for molding a fiber-reinforced resin using a SMC (sheet molding compound).

Concerning the RFI method, Patent Document 6 suggests a method for molding a fiber-reinforced resin using a resin support with a handling characteristic improved by filling a thermally stable holder with an uncured resin in an oligomer state which has low strength, and is thus easily broken. Patent Document 7 discloses a molded product, including a fiber-reinforced composite material containing reinforcing fibers having an average fiber length of 5 mm to 100 mm and a thermoplastic resin, wherein the molded product has thickness gradient, an amount of the thermoplastic resin is 10 to 1,000 parts by weight per 100 parts by weight of thee reinforcing fibers, and the reinforcing fibers have a fiber areal weight of from 25 $g/m^2$ to 3,000 $g/m^2$ and are substantially two-dimensionally randomly oriented. Patent Document 8 aims to provide a production method of a fiber-reinforced plastic molding article and an integral molding article in which a junction processed shape is simplified, and warpage and deformation are effectively prevented. Finally, Patent Document 9 teaches a composite material for cold pressing including: carbon fibers that are unidirectional continuous fibers; and a thermoplastic resin, wherein the composite material has a thickness of 0.3 mm or more, when the composite material is observed from a direction perpendicular to a continuous fiber direction.

Patent Document 10 discloses a resin supply material suitable for molding a fiber-reinforced resin, the resin supply material comprising reinforcing fibers and the resin, the reinforcing fibers are discontinuous fibers which are in the form of a web in which discontinuous fibers are dispersed in a bundle shape or a monofilament shape, and gaps to be impregnated with a resin exist between the discontinuous fibers, and the discontinuous fibers in the web presents a binder, wherein a fiber volume content Vfi of the reinforcing fibers as expressed by the following formula (II) is 20% or less. $Vfi = Vfl/Vpl \times 100$ ( %)$\cdots$ (II) Vf1: fiber volume (mm3 ) in resin supply material Vp1: volume (mm3 ) of resin supply material.

PRIOR ART DOCUMENTS

PATENT DOCUMENTS

Patent Document 1: Japanese Patent Laid-open Publication No. 2003-71856
Patent Document 2: Japanese Patent Laid-open Publication No. 2003-11231
Patent Document 3: Japanese Patent Laid-open Publication No. 2002-234078
Patent Document 4: Japanese Patent Laid-open Publication No. 2006-305867
Patent Document 5: Japanese Patent Laid-open Publication No. 2008-246981
Patent Document 6: Japanese Patent Laid-open Publication No. 2004-99731
Patent Document 7: European Patent Application No. 2 674 447 A1
Patent Document 8: Japanese Patent Laid-open Publication No. 2014-148111
Patent Document 9: European Patent Application No. 2 990 185 A1
Patent Document 10: International Patent Application WO 2014/103658

SUMMARY OF THE INVENTION

PROBLEMS TO BE SOLVED BY THE INVENTION

In the molding method in each of Patent Documents 3 and 4, a structural member can be produced by laminating an impregnated body with a dry base material, then heating and pressurizing the resulting laminate in a mold to impregnate a reinforcing fiber base material with a thermosetting resin in the impregnated body, and also the impregnated body may be excellent in handling characteristic because a support is impregnated with a resin. However, there is the problem that a fiber-reinforced resin prepared by such a molding method does not have desired properties because a support to be used has poor dynamic characteristics, and an applicable viscosity range is narrow.

The molding method in Patent Document 5 is used for the purpose of obtaining a molded article with smoothed proper external appearance quality by interposing a resin-non-impregnated base material between prepreg layers to suppress generation of depressions on a surface of the molded article. Thus, the prepreg has a high fiber content, and a small fiber content change ratio before and after molding. It is difficult to use a non-impregnated base material with a high weight per unit area, and to apply a resin supply material to uneven-thickness molding.

In the molding method in Patent Document 6, a structural member can be produced by laminating a resin support with a dry base material, then heating and pressurizing the resulting laminate in a mold to impregnate a reinforcing fiber base material with a thermosetting resin in the resin support, and also the resin support may be excellent in handling characteristic because a thermally stable resin film is filled with an uncured resin film. However, there is the problem that it is necessary to bore the thermally stable resin film with holes through which an uncured resin melted by heating flows out, and thus the process is complicated. Moreover, there is the problem that a resin which can be filled is limited to a solid resin in light of leakage of the uncured resin because the thermally stable resin film is bored with holes before molding.

Patent Document 6 also describes a method in which when the resin film is not bored with holes for the uncured resin to flow out, an uncured resin that is melted at 290°C or higher is supplied by bonding the end of the film with an adhesive of which strength is reduced when the temperature exceeds 200°C. This method has the problem that there is a difference in resin content between the center and the end of a molded article because the resin flows out only from the end of the film filled with the uncured resin. Patent Document 6 does not suggest that the viscosity of the uncured resin is made suitable for impregnation.

The present invention has been made in view of the situations described above, and an object of the present invention is to provide a resin supply material that is excellent in resin support characteristic, handling characteristic and dynamic characteristics, and a method for producing a fiber-reinforced resin using the resin supply material.

Another object of the present invention is to provide a resin supply material that is excellent in handling characteristic irrespective of the viscosity of a resin to be supplied, and a method for producing a fiber-reinforced resin using the resin supply material.

SOLUTIONS TO THE PROBLEMS

The claimed subj ect-matter is defined by the independent claims . Further preferred embodiments are defined by the dependent claims.

A resin supply material according to the present invention is a resin supply material which is suitable for molding a fiber-reinforced resin. The resin supply material includes reinforcing fibers and a resin, wherein a fiber weight content Wfi of the reinforcing fibers as expressed by the following formula (I) is 30% or less, and a fiber volume content Vfi of the reinforcing fibers as expressed by the following formula (II) is 20% or less.

$$\mathtt{Wfi\ =\ Wf1/(Wf1\ +\ Wr1)\ \times\ 100\ (\%)\ \cdot\cdot\cdot\ (I)}$$

Wf1: fiber weight (g) in resin supply material
Wr1: resin weight (g) in resin supply material

$$\mathtt{Vfi\ =\ Vf1/Vp1\ \times\ 100\ (\%)\ \cdot\cdot\cdot\ (II)}$$

Vf1: fiber volume ($mm^3$) in resin supply material
Vp1: volume ($mm^3$) of resin supply material

Further, a resin supply material is disclosed herein which is a resin supply material for molding a fiber-reinforced resin, the resin supply material including a covering film composed of a thermoplastic resin, and a thermosetting resin, wherein a value X obtained by dividing a tensile load F at a yield point as measured in a tension test (JIS K7127 (1999)) for the covering film by a width W of a test piece is 1 N/mm or more at 25°C and less than 1 N/mm at a temperature T as shown below.
Temperature T: temperature at which the viscosity of the thermosetting resin is minimum in heating of the thermosetting resin at a temperature elevation rate of 1.5°C/minute from 30°C.

Further, a method for using reinforcing fibers is disclosed herein, which reinforcing fibers is to be used in a resin supply material which is used for molding a fiber-reinforced resin and which includes reinforcing fibers and a resin, the method including using the reinforcing fibers as a web in which a thickness change ratio R of the reinforcing fibers before and after molding as expressed by the following formula (V) is within the range of 1.1 to 10.

$$\mathtt{R\ =\ t_0/t_1\ \cdot\cdot\cdot\ (V)}$$

t0: initial thickness (mm) of web
$t_1$: thickness (mm) when the web is pressurized at 0.1 MPa

A preform according to the present invention is formed by laminating and integrating the resin supply material according to the present invention and a base material.
A method for producing a fiber-reinforced resin according to the present invention includes molding a fiber-reinforced resin by heating and pressurizing the preform according to the present invention to supply the resin or the thermosetting resin from the resin supply material to the base material.

EFFECTS OF THE INVENTION

According to the present invention, there can be provided a resin supply material that is excellent in resin support characteristic, handling characteristic and dynamic characteristics, and a method for producing a fiber-reinforced resin using the resin supply material.
According to the present invention, there can be provided a resin supply material that is excellent in handling characteristic irrespective of the viscosity of a resin to be supplied, and a method for producing a fiber-reinforced resin using the resin supply material.

BRIEF DESCRIPTION OF THE DRAWINGS

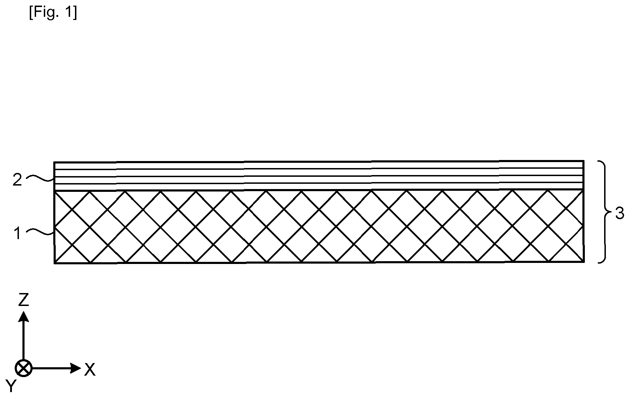

Fig. 1 is a schematic view showing a configuration of a preform.

EMBODIMENTS OF THE INVENTION

[First Aspect]

The present invention provides a resin supply material including reinforcing fibers and a resin as shown in Fig.

1. As shown in Fig. 1, a resin supply material 1 allows a fiber-reinforced resin to be molded by laminating the resin supply material 1 and a base material 2 to prepare a preform 3, heating and pressurizing the preform 3 in, for example, a closed space, and supplying a resin from the resin supply material 1 to the base material 2.

Here, the preform means a laminate obtained by laminating and integrating the resin supply material 1 and the base material 2, and examples thereof may include a sandwich laminate in which an outermost layer of a laminate obtained by laminating and integrating a predetermined number of resin supply materials 1 is sandwiched between base materials 2; an alternating laminate in which resin supply materials 1 and base materials 2 are alternately laminated; and a combination thereof. Formation of a preform beforehand is preferred because the base material 2 can be quickly and more uniformly impregnated with a resin in a process for production of a fiber-reinforced resin.

In a method for producing a fiber-reinforced resin using the resin supply material 1 of the present invention, it is necessary to supply a resin from the resin supply material 1 to the base material 2 while preventing generation of voids as much as possible, and therefore it is preferred to carry out press molding or vacuum-pressure molding. A mold for molding may be a double-sided mold such as a closed mold composed of a rigid body, or a single-sided mold. In the case of the latter, the preform 3 can also be disposed between a flexible film and a rigid open mold (where the preform 3 is pressurized because a space between the flexible film and the rigid open mold is depressurized as compared to the outside).

The resin supply material 1 of the present invention includes reinforcing fibers and a resin, and is preferably in the form of a sheet. Here, the thickness of the sheet is preferably 0.5 mm or more, more preferably 1 mm or more, still more preferably 1.5 mm or more from the viewpoint of a resin supply characteristic and dynamic characteristics. From the viewpoint of a handling characteristic and moldability, the thickness of the sheet is preferably 100 mm or less, more preferably 60 mm or less, still more preferably 30 mm or less.

A fiber weight content Wfi (before molding) of the resin supply material 1 of the present invention as expressed by the following formula is preferably 0.5% or more, more preferably 1.0% or more, still more preferably 1.5% or more. When the fiber weight content Wfi is less than 0.5%, the amount of the resin is excessively large with respect to the reinforcing fibers, the resin cannot be supported on the reinforcing fibers, or a large amount of the resin flows to the outside during molding. The fiber weight content Wfi (before molding) of the resin supply material 1 of the present invention as expressed by the following formula is preferably 30% or less, more preferably 22% or less, still more preferably 15% or less. When the fiber weight content Wfi is more than 30%, the fiber-reinforced resin may have a large number of voids due to poor impregnation of the resin into the base material 2. The fiber weight content Wfi is determined in accordance with JIS K7075 (Fiber Content and Void Content Test Methods for Carbon Fiber-Reinforced Plastic, 1991).

The fiber weight content Wfi of the resin supply material 1 can be determined in accordance with JIS K7075 (Fiber Content and Void Content Test Methods for Carbon Fiber-Reinforced Plastic, 1991) using only the resin supply material 1 taken out by polishing or cutting a preform including the resin supply material 1. When it is difficult to measure the fiber weight content Wfi in an uncured state, a resin supply material cured in a non-pressurized state.

$$Wfi = Wf1/(Wf1 + Wr1) \times 100 \; (\%)$$

Wf1: fiber weight (g) in resin supply material
Wr1: resin weight (g) in resin supply material

A fiber volume content Vfi (before molding) of the resin supply material 1 of the present invention as expressed by the following formula is preferably 0.3% or more, more preferably 0.6% or more, still more preferably 1. 0% or more. When the fiber volume content Vfi is less than 0.3%, the amount of the resin is excessively large with respect to the reinforcing fibers, the resin cannot be supported on the reinforcing fibers, or a large amount of the resin flows to the outside during molding. The fiber volume content Vfi (before molding) of the resin supply material 1 of the present invention as expressed by the following formula is preferably 20% or less, more preferably 15% or less, still more preferably 10% or less. When the fiber volume content Vfi is more than 20%, the fiber-reinforced resin may have a large number of voids due to poor impregnation of the resin into the base material 2. The fiber volume content Vfi is determined in accordance with JIS K7075 (Fiber Content and Void Content Test Methods for Carbon Fiber-Reinforced Plastic, 1991). In place of the above-mentioned method for determining the fiber volume content Vfi, the fiber volume content Vfi may be determined from the following formula using a thickness T1 (unit: mm, measured value), a weight per unit area Faw of reinforcing fibers (unit: $g/m^2$, catalog value or measured value), and a density $\rho$ of reinforcing fibers (unit: $g/cm^3$, catalog value or measured value). The thickness T1 is determined from an average of thicknesses of the resin supply material 1 at randomly selected ten points within an area of 50 mm (length) $\times$ 50 mm (width) using a microscope. The thickness direction is a direction orthogonal to a contact surface with the base material 2 to be used in the preform.

The fiber volume content Vfi of the resin supply material 1 can be determined in accordance with JIS K7075 (Fiber Content and Void Content Test Methods for Carbon Fiber-Reinforced Plastic, 1991) using only the resin supply material 1 taken out by polishing or cutting a preform including the resin supply material 1. When it is difficult to measure the fiber volume content Vfi in an uncured state, a resin supply material cured in a non-pressurized state.

$$Vfi = Vf1/Vp1 \times 100\ (\%)$$

Vf1: fiber volume (mm$^3$) in resin supply material
Vp1: volume (mm$^3$) of resin supply material

$$Vfi = Faw/\rho/T1/10\ (\%)$$

Faw: weight per unit area (g/m$^2$) of reinforcing fibers
p: density (g/cm$^3$) of reinforcing fibers
T1: thickness (mm) of resin supply material

In the resin supply material 1 of the present invention, a resin weight change ratio P of the resin supply material 1 before and after molding as expressed by the following formula is preferably 0.03 or more, more preferably 0.05 or more, still more preferably 0.08 or more for minimizing outflow of the resin, so that the resin efficiently flows from the resin supply material 1 to the base material 2. For causing the resin to flow from the resin supply material 1 to the base material 2, so that a fiber-reinforced resin having a reduced number of voids is obtained, the change ratio P is preferably 0.99 or less, more preferably 0.7 or less, still more preferably 0.5 or less. The resin weight Wr1 in resin supply material before molding and the resin weight Wr2 in resin supply material after molding are determined in accordance with JIS K7075 (Fiber Content and Void Content Test Methods for Carbon Fiber-Reinforced Plastic, 1991). In the case of a preform including the resin supply material 1, the resin weights Wr1 and Wr2 can be determined in accordance with JIS K7075 (Fiber Content and Void Content Test Methods for Carbon Fiber-Reinforced Plastic, 1991) using only the resin supply material 1 taken out by polishing or cutting the preform.

$$P = Wr2/Wr1$$

Wr1: resin weight (g) in resin supply material before molding
Wr2: resin weight (g) in resin supply material after molding

In the resin supply material 1 of the present invention, a fiber weight change ratio Q of the resin supply material 1 before and after molding as expressed by the following formula is preferably 1.1 or more, more preferably 1.3 or more, still more preferably 1.5 or more for causing the resin to flow from the resin supply material 1 to the base material 2, so that a fiber-reinforced resin having a reduced number of voids is molded. For minimizing outflow of the resin, so that the resin efficiently flows from the resin supply material 1 to the base material 2, the change ratio Q is preferably 30 or less, more preferably 15 or less, still more preferably 5 or less. A fiber volume content Vft of the resin supply material after molding is determined in accordance with JIS K7075 (Fiber Content and Void Content Test Methods for Carbon Fiber-Reinforced Plastic, 1991) . In place of the above-mentioned method for determining the fiber volume content Vft, the fiber volume content Vft may be determined from the following formula using a thickness T1 (unit: mm, measured value), a weight per unit area Faw of reinforcing fibers (unit: g/m$^2$, catalog value or measured value), and a density $\rho$ of reinforcing fibers (unit: g/cm$^3$, catalog value or measured value). The thickness T1 is determined from an average of thicknesses of the resin supply material 1 at randomly selected ten points within an area of 50 mm (length) $\times$ 50 mm (width). The thickness direction is a direction orthogonal to a contact surface with the base material 2 to be used in the preform.
The fiber volume content Vft of the resin supply material 1 can be determined in accordance with JIS K7075 (Fiber Content and Void Content Test Methods for Carbon Fiber-Reinforced Plastic, 1991) using only the resin supply material 1 taken out by polishing or cutting a fiber-reinforced resin obtained by molding.

$$Q = Vft/Vfi$$

Vfi: fiber volume content (%) before molding
Vft: fiber volume content (%) after molding

$$Vft = Faw/\rho/T1/10 \ (\%)$$

Faw: weight per unit area (g/m$^2$) of reinforcing fibers
ρ: density (g/cm$^3$) of reinforcing fibers
T1: thickness (mm) of resin supply material

In the resin supply material 1 of the present invention, it may also be preferred that both the change ratio P and the change ratio Q fall within the above-mentioned preferred ranges, respectively.

The reinforcing fiber will now be described. The reinforcing fiber to be used in the resin supply material 1 may be a continuous fiber that is used in a unidirectional base material, a fabric base material or the like, but the reinforcing fiber is according to the invention a discontinuous fiber from the viewpoint of a resin supply characteristic. The reinforcing fiber is according to the invention in the form of a web in which fibers are dispersed in a bundle shape or a monofilament shape, and gaps to be impregnated with a resin exist between the fibers. The form and the shape of the web are not limited, and for example, carbon fibers may be mixed with organic fibers, an organic compound or an inorganic compound, carbon fibers may be sealed together by other component, or carbon fibers may be bonded to a resin component. As a preferred form for easily producing a web in which fibers are dispersed, mention may be made of, for example, a base material which is in the form of a non-woven fabric obtained by a dry method or a wet method and in which carbon fibers are sufficiently opened, and bonded together by a binder composed of an organic compound.

A web composed of the reinforcing fibers to be used in the resin supply material 1 which is used for molding a fiber-reinforced resin and which includes reinforcing fibers and a resin may have a specific fiber length, form a strong network, and have high strength, and a spring back characteristic as described later. When a web having high strength and a spring back characteristic is used as reinforcing fibers that form the resin supply material 1 of the present invention, a fiber-reinforced resin having an excellent resin supply characteristic and high strength is easily obtained (i.e. the fiber volume content is easily increased) . Here, the spring back force can be defined as a web compressive stress (spring back force) at a porosity of 90% in accordance with JIS K6400-2 (Hardness and Compressive Deflection - Method A-1, 2012) . For the reinforcing fibers, the web compressive stress at a porosity of 90% is preferably 5 kPa or more, more preferably 50 kPa or more, still more preferably 100 kPa or more.

As a kind of reinforcing fibers, carbon fibers are preferred, but the reinforcing fibers may be glass fibers, aramid fibers, metal fibers or the like. The carbon fibers are not particularly limited, and for example, polyacrylonitrile (PAN)-based carbon fibers, pitch-based carbon fibers and rayon-based carbon fibers can be preferably used from the viewpoint of an effect of reducing the weight of the fiber-reinforced resin. One kind of the carbon fibers, or a combination of two or more kinds of the carbon fibers may be used. Among them, PAN-based carbon fibers are further preferred from the viewpoint of a balance between the strength and the elastic modulus of the resulting fiber-reinforced resin. The monofilament diameter of the reinforcing fibers is preferably 0.5 μm or more, more preferably 2 μm or more, still more preferably 4 μm or more. The monofilament diameter of the reinforcing fibers is preferably 20 μm or less, more preferably 15 μm or less, still more preferably 10 μm or less. The strand strength of the reinforcing fibers is preferably 3.0 GPa or more, more preferably 4.0 GPa or more, still more preferably 4.5 GPa or more. The strand elastic modulus of the reinforcing fibers is preferably 200 GPa or more, more preferably 220 GPa or more, still more preferably 240 GPa or more. When the strand strength or the elastic modulus of the reinforcing fibers are less than 3.0 GPa or less than 200 GPa, respectively, it may be unable to obtain desired characteristics as a fiber-reinforced resin.

The mean fiber length of the reinforcing fibers is preferably 0.1 mm or more, more preferably 1 mm or more, still more preferably 2 mm or more. The mean fiber length of the reinforcing fibers is preferably 100 mm or less, more preferably 50 mm or less, still more preferably 10 mm or less. Examples of the method for measuring the mean fiber length include a method in which reinforcing fibers are directly extracted from a reinforcing fiber base material; and a method in which a prepreg is dissolved using a solvent capable of dissolving only a resin of the prepreg, and the remaining reinforcing fibers are separated by filtration, and measured by microscopic observation (dissolution method). When a solvent capable of dissolving a resin is not available, mention is made of, for example, a method in which only the resin is burned off in a temperature range over which the oxidative weight loss of reinforcing fibers does not occur, and the reinforcing fibers are separated, and measured by microscopic observation (burning method). The measurement can be performed by randomly selecting 400 reinforcing fibers, determining the lengths of the reinforcing fibers to the order of 1 μm using an optical microscope, and calculating fiber lengths and ratios thereof. In comparison between the method in which reinforcing fibers are directly extracted from a reinforcing fiber base material and the method in which reinforcing fibers are extracted from a prepreg by a burning method or a dissolution method, there is no significant difference between the results obtained by the former method and the latter method as long as conditions are appropriately selected.

Here, "having a spring back characteristic" as described above means meeting the following requirement: $t_1 < t_2 \leq$ to where to is an initial thickness of the web; $t_1$ is a thickness of the web when the web is pressurized at 0.1 MPa; and $t_2$ is a thickness of the web when a load is applied to the web, and the load is then removed. Here, the reinforcing fibers that form the resin supply material 1 of the present invention may be used in such a manner that the thickness change ratio R (= $t_0/t_1$) is 1.1 or more, preferably 1.3 or more, more preferably 1.5 or more. When the thickness change ratio R is less than 1.1, it may be unable to obtain a molded product having a desired shape due to deterioration of the resin supply characteristic and shape formability. Here, the reinforcing fibers that form the resin supply material 1 of the present invention may be used in such a manner that the thickness change ratio R is 10 or less, preferably 7 or less, more preferably 4 or less. The thickness change ratio $t_0/t_1$ is more than 10, the handling characteristic of the resin supply material 1 may be deteriorated in impregnation of a resin. The method for measuring an initial thickness and a thickness when a load is removed is not particularly limited, and for example, the thickness can be measured using a micrometer, a caliper, a three-dimensional measurement device or a laser displacement meter, or by microscopic observation. Here, in microscopic observation, the web may be observed directly, or observed after the web is embedded in a thermosetting resin, and a cross-section is polished. The method for measuring the thickness when a load is applied is not particularly limited, and for example, the thickness can be measured by applying a load to the web composed of reinforcing fibers using a bending tester or a compression tester, and reading a displacement.

The orientation of fibers on an X-Y plane of the web (the X-Y plane is in a base material plane, and in the present invention, an axis orthogonal to a certain axis (X axis) in the base material plane is a Y axis, and an axis extending in a thickness direction of the base material (i.e. a direction vertical to the base material plane) is a Z axis) is preferably isotropic. An average of fiber two-dimensional orientation angles on the X-Y plane as measured by a measurement method as described later is preferably 5 degrees or more, more preferably 20 degrees or more, still more preferably 30 degrees or more. The closer to the ideal angle: 45 degrees, the better. When the average of fiber two-dimensional orientation angles is less than 5 degrees, it may be necessary to consider a lamination direction of the resin supply material because the dynamic characteristics of the fiber-reinforced resin considerably vary depending on the direction.

An average of fiber two-dimensional orientation angles on a plane orthogonal to the X-Y plane of the web as measured by a measurement method as described later is preferably 5 degrees or more, more preferably 10 degrees or more, still more preferably 20 degrees or more for improving the resin support characteristic. The average of fiber two-dimensional orientation angles on the plane orthogonal to the X-Y plane of the web is preferably 85 degrees or less, more preferably 80 degrees or less, still more preferably 75 degrees or less. When the average of fiber two-dimensional orientation angles is less than 5 degrees, or more than 85 degrees, fibers may be in close contact with one another, resulting in deterioration of the resin support characteristic.

A mass per unit area of a web composed of reinforcing fibers that are preferably used in the present invention is preferably 1 $g/m^2$ or more, more preferably 10 $g/m^2$ or more, still more preferably 30 $g/m^2$ or more. When the mass per unit area is less than 1 $g/m^2$, the resin support characteristic may be deteriorated, thus making it unable to secure a resin amount required for molding. Further, in the process of producing the web or the resin supply material 1, the handling characteristic may be poor, leading to deterioration of workability.

According to the invention, fibers in the web composed of reinforcing fibers that are preferably used in the present invention are bonded together by a binder. Accordingly, the handling characteristic and productivity of the web, and workability are improved, and the network structure of the web can be retained. The binder is not particularly limited, and examples of the binder that is preferably used include thermoplastic resins such as polyvinyl alcohol, ethylene-propylene copolymers, ethylene-vinyl acetate copolymers, polyvinyl chloride, polyvinylidene chloride, polyvinyl acetate, polycarbonate resins, styrene-based resins, polyamide-based resins, polyester-based resins, polyphenylene sulfide resins, modified polyphenylene ether resins, polyacetal resins, polyetherimide resins, polypropylene resins, polyethylene resins, fluororesins, thermoplastic acrylic resins, thermoplastic polyester resins, thermoplastic polyamideimide resins, acrylonitrile-butadiene copolymers, styrene-butadiene copolymers and acrylonitrile-styrene-butadiene copolymers; and thermosetting resins such as urethane resins, melamine resins, urea resins, thermosetting acrylic resins, phenol resins, epoxy resins and thermosetting polyester. A resin having at least one functional group selected from an epoxy group, a hydroxy group, an acrylate group, a methacrylate group, an amide group, a carboxyl group, a carboxylic acid, an acid anhydride group, an amino group and an imine group is preferably used from the viewpoint of the dynamic characteristics of the resulting fiber-reinforced resin. These binders may be used alone, or in combination of two or more thereof. The attaching amount of the binder is preferably 0.01% or more, more preferably 0.1% or more, still more preferably 1% or more. The attaching amount of the binder is preferably 20% or less, more preferably 15% or less, still more preferably 10% or less. When the attaching amount of the binder is more than 20%, much time may be required in a drying process, or resin impregnability may be deteriorated. When the attaching amount of the binder is less than 0.01%, it may be difficult to maintain the form of a web composed of reinforcing fibers, leading to deterioration of the handling characteristic when the web is used in the present invention. A method for measuring the attaching amount of the binder will be described later.

The resin to be used in the resin supply material 1 of the present invention will be described. The viscosity of the resin for use in the present invention during impregnation is preferably 1000 Pa·s or less, more preferably 100 Pa·s or less, still more preferably 10 Pa·s or less. When the viscosity is more than 1000 Pa·s, voids may be generated in the resulting fiber-reinforced resin because the later-described base material 2 is not sufficiently impregnated with the resin.

The kind of resin for use in the present invention is not particularly limited, and either a thermosetting resin or a thermoplastic resin can be used. When the resin is a thermosetting resin, heating to a temperature at which the thermosetting resin is cured is performed after molding as necessary in addition to heating during molding, so that the thermosetting resin is cured to obtain a fiber-reinforced resin. When the resin is a thermoplastic resin, the resin melted by heating during molding is cooled to solidify the resin, so that a fiber-reinforced resin is obtained. Examples of the thermosetting resin that is preferably used include epoxy resins, vinyl ester resins, phenol resins, thermosetting polyimide resins, polyurethane resins, urea resins, melamine resins and bismaleimide resins. In addition to a single epoxy resin, a copolymer of an epoxy resin and a thermosetting resin, a modified product, a resin obtained by blending two or more kinds of resins, and so on can be used. Examples of the thermoplastic resin tat is preferably used include polypropylene resins, polyethylene resins, polycarbonate resins, polyamide resins, polyester resins, polyarylene sulfide resins, polyphenylene sulfide resins, polyether ketone, polyether ether ketone resins, polyether ketone ketone resins, polyether sulfone resins, polyimide resins, polyamideimide resins, polyether imide resins and polysulfone resins. In addition, a cyclic oligomer that is a precursor of any of these resins is preferably used.

The base material 2 to be used in the preform of the present invention is a fiber base material composed of reinforcing fibers, and is a mat base material composed of reinforcing fibers. Specifically, a non-woven fabric formed of discontinuous fibers, or the like is preferably used. The continuous fiber means a reinforcing fiber in which a reinforcing fiber bundle is drawn and aligned in a continuous state without cutting the reinforcing fiber into short fibers. The number of filaments in one fiber bundle to be used in the base material 2 is preferably 500 or more, more preferably 1500 or more, still more preferably 2500 or more. The number of filaments in one fiber bundle is preferably 150000 or less, more preferably 100000 or less, still more preferably 70000 or less.

For increasing the resin impregnation rate to improve productivity of the fiber-reinforced resin, it is preferred that a mat base material composed of discontinuous fibers is used as the base material 2.

Examples of the method for producing a fiber-reinforced resin using the resin supply material 1 of the present invention include the following method. First, the preform 3 including the resin supply material 1, and at least one base material 2 selected from a sheet-shaped base material, a cloth-shaped base material and a porous base material is prepared, and set on a metal mold. The resin supply material 1 is softened on the metal mold at a high temperature, and the resin is then supplied to the base material 2 by pressurization. The pressurization method is preferably press molding or vacuum-pressure molding. When the resin is a thermosetting resin, the temperature during supply of the resin and the temperature during curing may be the same, or different. When the resin is a thermoplastic resin, the temperature during supply of the resin is preferably higher than the melting point of the resin by 10°C or more. The temperature at which the resin is solidified after supply of the resin is preferably lower than the melting point of the resin by 10°C or more, more preferably by 30°C or more, still more preferably 50°C or more. A mold for molding may be a double-sided mold such as a closed mold composed of a rigid body, or a single-sided mold. In the case of the latter, the preform 3 can also be disposed between a flexible film and a rigid open mold (where the preform 3 is pressurized because a space between the flexible film and the rigid open mold is depressurized as compared to the outside as described above).

<Method for Deriving Average of Fiber Two-Dimensional Orientation Angles on X-Y Plane>

The average of fiber two-dimensional orientation angles on the X-Y plane is measured in the following steps I and II. As described above, the X axis, the Y axis and the Z axis are mutually orthogonal, the X-Y plane is in the base material plane, and the Z axis extends in the thickness direction of the base material.

I. An average of two-dimensional orientation angles with all reinforcing fiber monofilaments orthogonally crossing randomly selected reinforcing fiber monofilaments on the X-Y plane is measured. If there are many reinforcing fiber monofilaments crossing the reinforcing fiber monofilaments, an average measured for randomly selected 20 crossing reinforcing fiber monofilaments may be used alternatively.

II. The measurement in the step I is repeated five times for other reinforcing fiber monofilaments, and an average of the measured values is calculated as an average of fiber two-dimensional orientation angles.

The method for measuring an average of fiber two-dimensional orientation angles from a prepreg is not particularly limited, and mention may be made of, for example, a method in which the orientation of reinforcing fibers is observed from a surface of a prepreg. Here, it is preferred to polish the prepreg surface to expose the fibers for more easily observing the reinforcing fibers. Mention may also be made of, for example, a method in which the orientation of reinforcing fibers is observed using light passing through a prepreg. Here, it is preferred to thinly slice the prepreg for more easily observing the reinforcing fibers. Mention may also be made of, for example, a method in which a prepreg is observed by X-ray computerized tomography transmission, and an image of oriented reinforcing fibers is taken. In the case of reinforcing fibers having high X-ray transparency, it is preferred to mix tracer fibers with the reinforcing fibers or apply a tracer chemical to the reinforcing fibers for more easily observing the reinforcing fibers.

When it is difficult to perform measurement by the above-mentioned methods, mention may be made of, for example, a method in which the orientation of reinforcing fibers is observed after a resin is removed without collapsing the structure of the reinforcing fibers. For example, measurement can be performed in the following manner: a prepreg is sandwiched between two stainless meshes, and fixed by a screw etc. so that the prepreg does not move, a resin component is then burned off, and the resulting reinforcing fiber base material is observed with an optical microscope or an electron microscope.

<Method for Deriving Average of Fiber Two-Dimensional Orientation Angles on Plane Orthogonal to X-Y plane>

The average of fiber two-dimensional orientation angles on a plane to the X-Y plane is measured in the following steps I and II.

I. Fiber two-dimensional orientation angles of randomly selected reinforcing fiber monofilaments on a plane orthogonal to the X-Y plane are measured. The fiber two-dimensional orientation angle is set to 0 degree when parallel to the Z axis, and to 90 degrees when vertical to the Z axis. Accordingly, the fiber two-dimensional orientation angle ranges from 0 degree to 90 degrees.
II. The measurement in the step I is performed for total 50 reinforcing fiber monofilaments, and an average of the measured values is calculated as an average of fiber two-dimensional orientation angles on a plane orthogonal to the X-Y plane.

The method for measuring an average of fiber inclination angles from a prepreg is not particularly limited, and mention may be made of, for example, a method in which the orientation of reinforcing fibers is observed from a Y-Z plane (Z-X plane) of a prepreg. Here, it is preferred to polish a cross-section of the prepreg to expose the fibers for more easily observing the reinforcing fibers. Mention may also be made of, for example, a method in which the orientation of reinforcing fibers is observed using light passing through a prepreg. Here, it is preferred to thinly slice the prepreg for more easily observing the reinforcing fibers. Mention may also be made of, for example, a method in which a prepreg is observed by X-ray computerized tomography transmission, and an image of oriented reinforcing fibers is taken. In the case of reinforcing fibers having high X-ray transparency, it is preferred to mix tracer fibers with the reinforcing fibers or apply a tracer chemical to the reinforcing fibers for more easily observing the reinforcing fibers.

<Method for Measuring Attaching Amount of Binder>

Carbon fibers are weighed ($W_1$), and then left standing for 15 minutes in an electric furnace set at a temperature of 450°C in a nitrogen flow at a rate of 50 liters/minute, so that a binder is fully thermally decomposed. The carbon fibers are transferred to a container in a dry nitrogen flow at 20 liters/minute, cooled for 15 minutes, and then weighed ($W_2$), and a binder attaching amount is determined from the following formula.

$$\texttt{binder attaching amount (\%) = } (W_1 - W_2)/W_1 \times 100$$

EXAMPLES

Reference Example 1 (Reinforcing Fibers (Carbon Fibers))

From a copolymer mainly composed of PAN, continuous carbon fibers including total 12,000 monofilaments were prepared by performing spinning, a firing treatment and a surface oxidation treatment. The continuous carbon fibers had characteristics as shown below.
Monofilament diameter: 7 μm
Mass per unit length: 0.8 g/m
Specific gravity: 1.8
Tensile strength: 4600 MPa
Tensile elastic modulus: 220 GPa

Reference Example 2 (Resin (epoxy resin (1)))

An epoxy resin (1) was prepared using 40 parts by mass of "jER (registered trademark)" 1007 (manufactured by Mitsubishi Chemical Corporation), 20 parts by mass of "jER (registered trademark)" 630 (manufactured by Mitsubishi Chemical Corporation), 40 parts by mass of "EPICLON (registered trademark)" 830 (manufactured by DIC Corporation), DICY7 (manufactured by Mitsubishi Chemical Corporation) as a curing agent in an amount of 0.9 equivalents in terms of active hydrogen groups based on the amount of epoxy groups in all the epoxy resin components, and 2 parts by mass of DCMU99 (manufactured by HODOGAYA CHEMICAL CO., LTD.) as a curing accelerator.

Reference Example 3 (Resin (Epoxy Resin (2))

An epoxy resin (2) was prepared using 6 parts by mass of "jER (registered trademark)" 630 (manufactured by Mitsubishi Chemical Corporation), 19 parts by mass of "EPON (registered trademark)" 825 (manufactured by Mitsubishi Chemical Corporation), 15 parts by mass of diglycidyl aniline (manufactured by Nippon Kayaku Co., Ltd.), 60 parts by mass of "Kane Ace (registered trademark)" MX-416 (manufactured by Kaneka Corporation), 31 parts by mass of "jERCURE (registered trademark) W, and 1 part by mass of DIC-TBC (manufactured by DIC Corporation).

Reference Example 4 (Epoxy Resin Film)

Using a reverse roll coater, the epoxy resin (1) prepared in Reference Example 2 was applied onto a release paper to prepare resin films with masses per unit area of 37, 74 and 100 g/m$^2$, respectively.

Reference Example 5 (Carbon Fiber Web (1))

The carbon fibers obtained in Reference Example 1 were cut to a predetermined length by a cartridge cutter to prepare chopped carbon fibers. A dispersion liquid including water and a surfactant (Polyoxyethylene Lauryl Ether (brand name), manufactured by NACALAI TESQUE, INC.) and having a concentration of 0.1% by mass was prepared, and a papermaking base material was produced by a production apparatus for papermaking base materials using the dispersion liquid and the chopped carbon fibers. The production apparatus includes a cylindrical container as a dispersion tank which includes an opening cock in the lower part of the container and which has a diameter of 1000 mm; and a linear transportation section (inclination angle: 30 degrees) which connects the dispersion tank and a papermaking tank. A stirrer is attached to an opening section on the upper surface of the dispersion tank, and the chopped carbon fibers and the dispersion liquid (dispersion medium) can be introduced to the stirrer through the opening section. The papermaking tank is a tank including a mesh conveyor having a 500 mm-wide papermaking surface on the bottom, and a conveyor capable of conveying a carbon fiber base material (papermaking base material) is connected to the mesh conveyor. In papermaking, the carbon fiber concentration in the dispersion liquid was adjusted to adjust the mass per unit area. About 5% by mass of a polyvinyl alcohol aqueous solution (KURARAY POVAL, manufactured by KURARAY CO., LTD) as a binder was deposited on the carbon fiber base material subjected to papermaking, and was dried in a drying furnace at 140°C for 1 hour to prepare a desired carbon fiber web. The mean fiber length was 5.8 mm, the average of fiber two-dimensional orientation angles on the X-Y plane was 47.3°, and the average of fiber two-dimensional orientation angles on a plane orthogonal to the X-Y plane was 80.7°.

Reference Example 6

The carbon fiber web (1) obtained in Reference Example 5 was impregnated with the epoxy resin (1) prepared in Reference Example 2, so that a resin supply material was prepared. The impregnation process is as described below.

(1) About 1850 g/m$^2$ of the epoxy resin film (size: 10 × 10 cm$^2$) obtained in Reference Example 4 is disposed on the carbon fiber web (1) (size: 10 × 10 cm$^2$) obtained in Reference Example 5.
(2) Heating is performed at 0.1 MPa and 70°C for about 1.5 hours.

The weight per unit area of carbon fibers was 100 g/m$^2$, the fiber volume content was 3.0%, and the fiber weight content was 5.0%. An impregnation test was conducted using the obtained resin supply material and 15 dry fabrics (Cloth manufactured by Toray Industries, Inc., part number: CO6343B, plain fabric, weight per unit area: 198 g/m$^2$). The process includes the following steps.

(1) The obtained resin supply material (size: 10 × 10 cm$^2$) is disposed on each of 15 dry fabrics (Cloth manufactured by Toray Industries, Inc., part number: CO6343B, plain fabric, weight per unit area: 198 g/m$^2$).
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

After curing, a resin-spread area of the resin supply material-disposed layer was measured, and the result showed that the resin-spread area was 200 cm$^2$. For the impregnation distance, about 13 layers including resin film-disposed layers were impregnated.

Reference Example 7

The carbon fiber web (1) (weight per unit area: 1100 g/m$^2$) obtained in Reference Example 5 was sandwiched by one dry fabric (Cloth manufactured by Toray Industries, Inc., part number: CO6343B, plain fabric, weight per unit area: 198 g/m$^2$), and impregnated at 40°C and in vacuum and at 2 MPa with the epoxy resin (2) prepared in Reference Example 3, and was then heated at a rate of 3°C/minute, and held at 150°C for 40 minutes to mold a composite. A tension test was conducted in accordance with JIS 7164 (2005), and the result showed that the composite strength was 315.3 MPa.

Reference Example 8

An impregnation test was conducted using the epoxy resin film obtained in Reference Example 4 and 15 dry fabrics (Cloth manufactured by Toray Industries, Inc., part number: CO6343B, plain fabric, weight per unit area: 198 g/m$^2$). The process includes the following steps.

(1) 1440 g/m$^2$ of the epoxy resin film (size: 10 × 10 cm$^2$) obtained in Reference Example 4 is disposed on each of 15 dry fabrics (Cloth manufactured by Toray Industries, Inc., part number: CO6343B, plain fabric, weight per unit area: 198 g/m$^2$) .
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

After curing, a resin-spread area of the resin film-disposed layer was measured, and the result showed that the resin-spread area was 320 cm$^2$. For the impregnation distance, about 8 layers including resin film-disposed layers were impregnated.

Reference Example 9

A melamine resin foam (manufactured by BASF SE, BASOTECT UF Grade, weight per unit area: 670 g/m$^2$) was sandwiched by one dry fabric (Cloth manufactured by Toray Industries, Inc., part number: CO6343B, plain fabric, weight per unit area: 198 g/m$^2$), and impregnated at 40°C and in vacuum and at 2 MPa with the epoxy resin (2) prepared in Reference Example 3, and was then heated at a rate of 3°C/minute, and held at 150°C for 40 minutes to mold a composite. A tension test was conducted in accordance with JIS 7164 (2005), and the result showed that the composite strength was 42.5 MPa.

(Example 1)

The carbon fiber web (1) obtained in Reference Example 5 was impregnated with the epoxy resin (1) prepared in Reference Example 2, so that a resin supply material was prepared. The impregnation process is as described below.

(1) 750 g/m$^2$ of the epoxy resin film (size: 13.8 × 13.8 cm$^2$) obtained in Reference Example 4 is disposed on each of front and back surfaces of the carbon fiber web (1) (weight per unit area of carbon fibers: 100 g/m$^2$, size: 13.8 × 13.8 cm$^2$) obtained in Reference Example 5.
(2) Pressurization and heating are performed at 0.1 MPa and 70°C for about 1.5 hours.

As shown in Table 1(a), the fiber volume content was 4.3%, and the fiber weight content was 6.3%.

(Example 2)

A flat plate was prepared using the resin supply material obtained in Example 1 and a dry fabric (Cloth manufactured by Toray Industries, Inc., part number: CO6343B, plain fabric, weight per unit area of carbon fibers: 198 g/m$^2$) . The molding process is as described below.

(1) Two dry fabric layers are disposed on each of front and back surfaces of the resin supply material (size: 13.8 ×

13.8 cm$^2$) obtained in Example 1.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 13.8% and the fabric layer had a fiber volume content of 68.1% as calculated from the thickness of each layer and the weight per unit area of reinforcing fibers in each layer. The resin weight change ratio P and the fiber volume content change ratio Q in the resin supply material before and after molding were 0.28 and 3.2, respectively. A cross-section of the obtained flat plate was observed, and the result showed that there were no voids in the flat plate. In this example, presence/absence of voids was determined by presence/absence of vacant space with a diameter of 5 $\mu$m or more in a microscopic observation image.

(Example 3)

The carbon fiber web (1) obtained in Reference Example 5 was impregnated with the epoxy resin (1) prepared in Reference Example 2, so that a resin supply material was prepared. The impregnation process is as described below.

(1) 500 g/m$^2$ of the epoxy resin film (size: 13.8 $\times$ 13.8 cm$^2$) obtained in Reference Example 4 is disposed on each of front and back surfaces of the carbon fiber web (1) (weight per unit area of carbon fibers: 100 g/m$^2$, size: 13.8 $\times$ 13.8 cm$^2$) obtained in Reference Example 5.
(2) Heating is performed at 0.1 MPa and 70°C for about 1.5 hours.

As shown in Table 1(a), the fiber volume content was 6.2%, and the fiber weight content was 9.1%.

(Example 4)

A flat plate was prepared using the resin supply material obtained in Example 3 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 $\times$ 13.8 cm$^2$) obtained in Example 3.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.1% and the fabric layer had a fiber volume content of 61.6% as calculated from the thickness of each layer and the weight per unit area of reinforcing fibers in each layer. The resin weight change ratio P and the fiber volume content change ratio Q in the resin supply material before and after molding were 0.38 and 2.6, respectively. A cross-section of the obtained flat plate was observed, and the result showed that there were no voids in the flat plate.

(Example 5)

The carbon fiber web (1) obtained in Reference Example 5 was impregnated with the epoxy resin (1) prepared in Reference Example 2, so that a resin supply material was prepared. The impregnation process is as described below.

(1) 400 g/m$^2$ of the epoxy resin film (size: 13.8 $\times$ 13.8 cm$^2$) obtained in Reference Example 4 is disposed on each of front and back surfaces of the carbon fiber web (1) (weight per unit area of carbon fibers: 100 g/m$^2$, size: 13.8 $\times$ 13.8 cm$^2$) obtained in Reference Example 5.
(2) Heating is performed at 0.1 MPa and 70°C for about 1.5 hours.

As shown in Table 1(a), the fiber volume content was 7.7%, and the fiber weight content was 11.1%.

(Example 6)

A flat plate was prepared using the resin supply material obtained in Example 5 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 5.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.4% and the fabric layer had a fiber volume content of 63.7% as calculated from the thickness of each layer and the weight per unit area of reinforcing fibers in each layer. The resin weight change ratio P and the fiber volume content change ratio Q in the resin supply material before and after molding were 0.43 and 2.1, respectively. A cross-section of the obtained flat plate was observed, and the result showed that there were no voids in the flat plate.

(Example 7)

The carbon fiber web (1) obtained in Reference Example 5 was impregnated with the epoxy resin (1) prepared in Reference Example 2, so that a resin supply material was prepared. The impregnation process is as described below.

(1) 250 g/m$^2$ of the epoxy resin film (size: 13.8 × 13.8 cm$^2$) obtained in Reference Example 4 is disposed on each of front and back surfaces of the carbon fiber web (1) (weight per unit area of carbon fibers: 100 g/m$^2$, size: 13.8 × 13.8 cm$^2$) obtained in Reference Example 5.
(2) Heating is performed at 0.1 MPa and 70°C for about 1.5 hours.

As shown in Table 1(a), the fiber volume content was 11.8%, and the fiber weight content was 16.7%.

(Example 8)

A flat plate was prepared using the resin supply material obtained in Example 7 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 7.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 17.7% and the fabric layer had a fiber volume content of 68.2% as calculated from the thickness of each layer and the weight per unit area of reinforcing fibers in each layer. The resin weight change ratio P and the fiber volume content change ratio Q in the resin supply material before and after molding were 0.62 and 1.5, respectively. A cross-section of the obtained flat plate was observed, and the result showed that there were no voids in the flat plate.

(Example 9)

The carbon fiber web (1) obtained in Reference Example 5 was impregnated with the epoxy resin (1) prepared in Reference Example 2, so that a resin supply material was prepared. The impregnation process is as described below.

(1) 1770 g/m$^2$ of the epoxy resin film (size: 13.8 × 13.8 cm$^2$) obtained in Reference Example 4 is disposed between layers in the web (weight per unit area of carbon fibers: 300 g/m$^2$, size: 13.8 × 13.8 cm$^2$) obtained in Reference Example 5.
(2) Heating is performed at 0.1 MPa and 70°C for about 1.5 hours.

As shown in Table 1(a), the fiber volume content was 10.4%, and the fiber weight content was 14.5%.

(Example 10)

A flat plate was prepared using the resin supply material obtained in Example 9 and a dry fabric (Cloth from Toray Industries, Inc., part number: CO6343B, plain fabric, weight per unit area: 198 g/m$^2$) . The molding process is as described below.

(1) Two dry fabric layers are disposed on each of front and back surfaces of the resin supply material (size: 13.8 × 13.8 cm$^2$) obtained in Example 9.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.2% and the fabric layer had a fiber volume content of 67.1% as calculated from the thickness of each layer and the weight per unit area of reinforcing fibers in each layer. The resin weight change ratio P and the fiber volume content change ratio Q in the resin supply material before and after molding were 0.60 and 1.6, respectively. A cross-section of the obtained flat plate was observed, and the result showed that there were a small number of voids, and the void content was less than 5%. In this example and the following examples, the void content was calculated as a ratio of the area of voids to the total area in a microscopic observation image using different-colored area analysis software.

(Example 11)

The carbon fiber web (1) obtained in Reference Example 5 was impregnated with the epoxy resin (1) prepared in Reference Example 2, so that a resin supply material was prepared. The impregnation process is as described below.

(1) 2630 g/m$^2$ of the epoxy resin film (size: 13.8 × 13.8 cm$^2$) obtained in Reference Example 4 is disposed between layers in the carbon fiber web (1) (weight per unit area of carbon fibers: 500 g/m$^2$, size: 13.8 × 13.8 cm$^2$) obtained in Reference Example 5.
(2) Heating is performed at 0.1 MPa and 70°C for about 1.5 hours.

As shown in Table 1(a), the fiber volume content was 11.5%, and the fiber weight content was 16.0%.

(Example 12)

A flat plate was prepared using the resin supply material obtained in Example 11 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 11.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.9% and the fabric layer had a fiber volume content of 62.7% as calculated from the thickness of each layer and the weight per unit area of reinforcing fibers in each layer. The resin weight change ratio P and the fiber volume content change ratio Q in the resin supply material before and after molding were 0.64 and 1.5, respectively. A cross-section of the obtained flat plate was observed, and the result showed that there were a small number of voids, and the void content was less than 5%.

(Example 13)

3000 g/m$^2$ of the epoxy resin film (size: 13.8 × 13.8 cm$^2$) obtained in Reference Example 4 is disposed between layers in the carbon fiber web (1) (weight per unit area of carbon fibers: 100 g/m$^2$, size: 13.8 × 13.8 cm$^2$) obtained in Reference Example 5, so that a resin supply material was prepared. As shown in Table 1(a), the fiber volume content was 0.6%, and the fiber weight content was 3.2%.

(Example 14)

A flat plate was prepared using the resin supply material obtained in Example 13 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 13.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 17.1% and the fabric layer had a fiber volume content of 62.1% as calculated from the thickness of each layer and the weight per unit area of reinforcing fibers in each layer. The resin weight change ratio P and the fiber volume content change ratio Q in the resin supply material before and after molding were 0.11 and 28.5, respectively. A cross-section of the obtained flat plate was observed, and the result showed that there were a small number of voids, and the void content was less than 5%.

(Example 15)

1000 g/m$^2$ of the epoxy resin film (size: 13.8 × 13.8 cm$^2$) obtained in Reference Example 4 is disposed between layers in the carbon fiber web (1) (weight per unit area of carbon fibers: 100 g/m$^2$, size: 13.8 × 13.8 cm$^2$) obtained in Reference Example 5, so that a resin supply material was prepared. As shown in Table 1(a), the fiber volume content was 1.1%, and the fiber weight content was 9.1%.

(Example 16)

A flat plate was prepared using the resin supply material obtained in Example 15 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 15.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.4% and the fabric layer had a fiber volume content of 65.5% as calculated from the thickness of each layer and the weight per unit area of reinforcing fibers in each layer. The resin weight change ratio P and the fiber volume content change ratio Q in the resin supply material before and after molding were 0.34 and 14.9, respectively. A cross-section of the obtained flat plate was observed, and the result showed that there were a small number of voids, and the void content was less than 5%.

(Example 17)

1900 g/m$^2$ of the epoxy resin film (size: 13.8 × 13.8 cm$^2$) obtained in Reference Example 4 is disposed between layers in the carbon fiber web (1) (weight per unit area of carbon fibers: 500 g/m$^2$, size: 13.8 × 13.8 cm$^2$) obtained in Reference Example 5, so that a resin supply material was prepared. As shown in Table 1(a), the fiber volume content was 12.5%, and the fiber weight content was 20.8%.

(Example 18)

A flat plate was prepared using the resin supply material obtained in Example 17 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 17.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.8% and the fabric layer had a fiber volume content of 64.1% as calculated from the thickness of each layer and the weight per unit area of reinforcing fibers in each layer. The resin weight change ratio P and the fiber volume content change ratio Q in the resin supply material before and after molding were 0.87 and 1.3, respectively. A cross-section of the obtained flat plate was observed, and the result showed that there were a small number of voids, and the void content was less than 5%.

(Example 19)

4300 g/m$^2$ of the epoxy resin film (size: 13.8 × 13.8 cm$^2$) obtained in Reference Example 4 is disposed between layers in the carbon fiber web (1) (weight per unit area of carbon fibers: 1200 g/m$^2$, size: 13.8 × 13.8 cm$^2$) obtained in Reference Example 5, so that a resin supply material was prepared. As shown in Table 1(a), the fiber volume content was 14.5%, and the fiber weight content was 21.8%.

(Example 20)

A flat plate was prepared using the resin supply material obtained in Example 19 and a dry fabric (Cloth manufactured by Toray Industries, Inc., part number: CO6343B, plain fabric, weight per unit area: 198 g/m$^2$). The molding process is as described below.

(1) Two dry fabric layers are disposed on each of front and back surfaces of the resin supply material (size: 13.8 × 13.8 cm$^2$) obtained in Example 19.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 16.1% and the fabric layer had a fiber volume content of 66.3% as calculated from the thickness of each layer and the weight per unit area of reinforcing fibers in each layer. The resin weight change ratio P and the fiber volume content change ratio Q in the resin supply material before and after molding were 0.97 and 1.1, respectively. A cross-section of the obtained flat plate was observed, and the result showed that there were a small number of voids, and the void content was less than 5%.

(Example 21)

The carbon fiber web (1) obtained in Reference Example 5 was cut into 60 pieces each having a width of 5 mm, and these pieces were arranged with the X-Y plane turned to the Z-X plane. A web with a weight per unit area of 220 g/m$^2$ was prepared. The average of two-dimensional orientation angles on the X-Y plane was 8.7°, and the average of fiber two-dimensional orientation angles on a plane orthogonal to the X-Y plane was 9 .1° (Y-Z plane) or 45.1° (Z-X plane). The obtained web was impregnated with the epoxy resin (1) prepared in Reference Example 2, so that a resin supply material was prepared. The impregnation process is as described below.

(1) 1500 g/m$^2$ of the epoxy resin film (size: 13.8 × 13.8 cm$^2$) obtained in Reference Example 4 is disposed on the web (weight per unit area of carbon fibers: 220 g/m$^2$, size: 13.8 × 13.8 cm$^2$).
(2) Heating is performed at 0.1 MPa and 70°C for about 1.5 hours.

As shown in Table 1(a), the fiber volume content was 8.8%, and the fiber weight content was 12.8%.

(Example 22)

A flat plate was prepared using the resin supply material obtained in Example 21 and a dry fabric (Cloth manufactured by Toray Industries, Inc., part number: CO6343B, plain fabric, weight per unit area: 198 g/m$^2$). The molding

process is as described below.

(1) Two dry fabric layers are disposed on each of front and back surfaces of the resin supply material (size: 13.8 × 13.8 cm$^2$) obtained in Example 21.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

As shown in Table 1(b), the reinforcing fiber web layer (resin supply layer) had a fiber volume content of 17.2% and the fabric layer had a fiber volume content of 63.5% as calculated from the thickness of each layer and the weight per unit area of reinforcing fibers in each layer. The resin weight change ratio P and the fiber volume content change ratio Q in the resin supply material before and after molding were 0.46 and 2.0, respectively. A cross-section of the obtained flat plate was observed, and the result showed that there were a small number of voids, and the void content was less than 5%.

(Example 23)

A compressive stress (spring back force) of the web which was prepared in Reference example 5 and would be used as reinforcing fibers to be used in a resin supply material was measured at a porosity of 90% in accordance with JIS K6400-2 (Hardness and Compressive Deflection - Method A-1, 2012), and the result showed that the compressive stress of the web was 200 kPa as shown in Table 2. The initial thickness to was 51 mm, the thickness $t_1$ at 0.1 MPa was 18 mm, and the ratio $t_0/t_1$ was 2.8.

(Comparative Example 1)

The epoxy resin (2) prepared in Reference Example 3 had a low viscosity at room temperature, and therefore had a poor handling characteristic when a release paper was absent. Thus, the epoxy resin (2) was difficult to mold by RFI (resin film infusion).

(Comparative Example 2)

The carbon fiber bundle obtained in Reference Example 1 was cut to a length of 25 mm by a cartridge cutter to prepare a resin supply material. The impregnation process is as described below.

(1) A carbon fiber bundle having a length of 25 mm is uniformly dropped and scattered onto 200 g/m$^2$ of the resin film obtained in Reference Example 4 (weight per unit area of carbon fibers: 200 g/m$^2$, size: 13.8 × 13.8 cm$^2$) .
(2) The carbon fibers are sandwiched by 200 g/m$^2$ of a resin film.
(3) A heat treatment is performed at 70°C for about 1 hour.

As shown in Table 1(a), the fiber volume content was 21.6%, and the fiber weight content was 33.3%.

(Comparative Example 3)

A flat plate was prepared using the resin supply material obtained in Comparative Example 2 and a dry fabric (Cloth manufactured by Toray Industries, Inc., part number: CO6343B, plain fabric, weight per unit area: 198 g/m$^2$). The molding process is as described below.

(1) Two dry fabric layers (Cloth manufactured by Toray Industries, Inc., part number: CO6343B, plain fabric, weight per unit area: 198 g/m$^2$) are disposed on each of front and back surfaces of the resin supply material (size: 13.8 × 13.8 cm$^2$) obtained in Comparative Example 2.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

It was unable to prepare a molded article with the material of Comparative Example 2 because a surface layer section of the dry fabric was not impregnated with the resin.

(Comparative Example 4)

A resin supply material was prepared using a dry fabric (Cloth manufactured by Toray Industries, Inc., part number: CO6343B, plain fabric, weight per unit area: 198 g/m²). The impregnation process is as described below.

(1) 100 g/m² of the resin film obtained in Reference Example 4 is disposed on each of front and back surfaces of a dry fabric (Cloth manufactured by Toray Industries, Inc., part number: CO6343B, plain fabric, weight per unit area: 198 g/m²) .
(2) A heat treatment is performed at 70°C for about 1 hour.

As shown in Table 1(a), the fiber volume content was 33.0%, and the fiber weight content was 49.7%.

(Comparative Example 5)

A flat plate was prepared using the resin supply material obtained in Comparative Example 4 and a dry fabric (Cloth manufactured by Toray Industries, Inc., part number: CO6343B, plain fabric, weight per unit area: 198 g/m²). The molding process is as described below.

(1) Two dry fabric layers (Cloth manufactured by Toray Industries, Inc., part number: CO6343B, plain fabric, weight per unit area: 198 g/m²) are disposed on each of front and back surfaces of the resin supply material (size: 13.8 × 13.8 cm²) obtained in Comparative Example 4.
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

It was unable to prepare a molded article with the material of Comparative Example 4 because a surface layer section of the dry fabric was not impregnated with the resin.

(Comparative Example 6)

A compressive stress (spring back force) of a melamine resin foam (manufactured by BASF SE, BASOTECT UF Grade) different from reinforcing fibers to be used in a resin supply material was measured at a porosity of 90% in accordance with JIS K6400-2 (Hardness and Compressive Deflection - Method A-1, 2012), and the result showed that the compressive stress of the web was 210 kPa as shown in Table 2. The initial thickness to was 50 mm, the thickness $t_1$ at 0.1 MPa was 4 mm, and the ratio $t_0/t_1$ was 12.5.

(Comparative Example 7)

A compressive stress (spring back force) of a polyether-based polyurethane foam (manufactured by Inoac Corporation, brand name: ECT) different from reinforcing fibers to be used in a resin supply material was measured at a porosity of 90% in accordance with JIS K6400-2 (Hardness and Compressive Deflection - Method A-1, 2012), and the result showed that the compressive stress of the web was 20 kPa as shown in Table 2. The initial thickness to was 50 mm, the thickness $t_1$ at 0.1 MPa was 2.5 mm, and the ratio $t_0/t_1$ was 20.

[Table 1]

| Table 1(a) | Example 1 | Example 3 | Example 5 | Example 7 | Example 9 | Example 11 | Example 13 | Example 15 | Example 17 | Example 19 | Example 21 | Comparative Example 2 | Comparative Example 4 |
|---|---|---|---|---|---|---|---|---|---|---|---|---|---|
| Weight per unit area of carbon fibers (g/m²) | 100 | 100 | 100 | 100 | 300 | 500 | 100 | 100 | 500 | 1200 | 220 | 200 | 198 |
| Weight per unit area of resin (g/m²) | 1500 | 1000 | 800 | 500 | 1770 | 2630 | 3000 | 1000 | 1900 | 4300 | 1500 | 400 | 200 |
| Fiber volume content of resin supply material Vfi (%) | 4.3 | 6.2 | 7.7 | 11.8 | 10.4 | 11.5 | 0.6 | 1. 1 | 12.5 | 14.5 | 8.8 | 21.6 | 33.0 |
| Fiber weight content of resin supply material Wfi (%) | 6.3 | 9.1 | 11.1 | 16.7 | 14.5 | 16.0 | 3.2 | 9. 1 | 20.8 | 21.8 | 12.8 | 33.3 | 49.7 |

EP 3 263 332 B1

| Table 1(b) | Example 2 | Example 4 | Example 6 | Example 8 | Example 10 | Example 12 | Example 14 | Example 16 | Example 18 | Example 20 | Example 22 |
|---|---|---|---|---|---|---|---|---|---|---|---|
| Fiber volume content of resin supply layer Vft (%) | 13.8 | 16.1 | 16.4 | 17.7 | 16.2 | 16.9 | 17.1 | 16.4 | 16.8 | 16.1 | 17.2 |
| Fiber volume content of fabric layer (%) | 68.1 | 61. 6 | 63.7 | 68.2 | 67.1 | 62.7 | 62.1 | 65.5 | 64.1 | 66.3 | 63.5 |
| Resin weight change ratio P (Wr2/Wr1) | 0.28 | 0.38 | 0.43 | 0.62 | 0.60 | 0.64 | 0.11 | 0.34 | 0.87 | 0.97 | 0.46 |
| Fiber volume content change ratio Q (Vft/Vfi) in resin supply layer | 3.2 | 2.6 | 2.1 | 1.5 | 1.6 | 1.5 | 28.5 | 14.9 | 1.3 | 1.1 | 2.0 |

EP 3 263 332 B1

[Table 2]

|  | Example 23 | Comparative Example 6 | Comparative Example 7 |
|---|---|---|---|
| Spring back force (kPa) | 200 | 210 | 20 |
| Thickness change ratio R (t0/t1) | 2.8 | 12.5 | 20.0 |

The present disclosure further discloses a resin supply material including a covering film composed of a thermoplastic resin, and a thermosetting resin. As shown in Fig. 1, a resin supply material 1 allows a fiber-reinforced resin to be produced by laminating the resin supply material 1 and a base material 2 to prepare a preform 3, heating and pressurizing the preform 3 in, for example, a closed space, and supplying a thermosetting resin from the resin supply material 1 to the base material 2. The thermosetting resin serves as a matrix resin for the fiber-reinforced resin.

In a method for producing a fiber-reinforced resin using the resin supply material 1 of the present disclosure, it is necessary to supply a thermosetting resin from the resin supply material 1 to the base material 2 while preventing generation of voids as much as possible, and therefore it is preferred to carry out press molding or vacuum-pressure molding. A mold for molding may be a double-sided mold such as a closed mold composed of a rigid body, or a single-sided mold. In the case of the latter, the preform 3 can also be disposed between a flexible film and a rigid open mold (where the preform 3 is pressurized because a space between the flexible film and the rigid open mold is depressurized as compared to the outside).

The resin supply material 1 of the present disclosure is preferably in the form of a sheet including a covering film composed of a thermoplastic resin, and a thermosetting resin. The thickness of the sheet is preferably 0.1 mm or more, more preferably 0.5 mm or more from the viewpoint of a resin supply characteristic and dynamic characteristics. From the viewpoint of a handling characteristic and moldability, the thickness of the sheet is preferably 100 mm or less, more preferably 60 mm or less, still more preferably 30 mm or less.

The method for measuring a sheet thickness is not particularly limited, and for example, the thickness can be measured using a micrometer, a caliper, a three-dimensional measurement device or a laser displacement meter.

The covering film composed of a thermoplastic resin will now be described. A value X obtained by dividing a tensile load F at a yield point as measured in a tension test (JIS K7127 (1999)) for the covering film in the present disclosure by a width W of a test piece is 1 N/mm or more, preferably 2 N/mm or more at 25°C. When the value X at 25°C is in the above-mentioned range, the resin supply material 1 can be easily handled without breakage of the covering film during conveyance, lamination and so on of the resin supply material 1.

The value X is less than 1 N/mm, preferably less than 0.5 N/mm at a temperature T as shown below. The temperature T is a temperature at which the viscosity of the thermosetting resin is minimum in heating of the thermosetting resin at a temperature elevation rate of 1.5°C/minute from 30°C. When there are a plurality of temperatures at which the viscosity of the thermosetting set is minimum, the lowest of these temperatures is set to the temperature T. When the value X at the temperature T is in the above-mentioned range, the covering film is broken during molding, so that the thermosetting resin can be supplied to the base material 2.

Generally, a thermosetting resin passes through a melting process to be cured as the temperature is elevated. The viscosity of the thermosetting resin decreases in the melting process, and then changes to increase due to a curing reaction. Impregnability to the base material 2 is improved as the viscosity of the thermosetting resin decreases. Accordingly, best impregnability may be attained in the case where the thermosetting resin is supplied to the base material 2 when the viscosity of the thermosetting resin is minimum. Of course, it is not the case that the thermosetting resin can be supplied to the base material 2 only when the viscosity of the thermosetting resin is minimum, but the thermosetting resin can be supplied until the initial stage of the curing reaction after the start of elevation of the temperature. After the curing reaction proceeds, so that the viscosity of the thermosetting resin markedly increases, it becomes difficult to supply the thermosetting resin.

In the present disclosure, the covering film has a value X of less than 1 N/mm at the temperature T, i.e. a temperature at which the viscosity of the thermosetting resin changes to increase due to the curing reaction in heating of the thermosetting resin. Since the value X decreases as the temperature is elevated, the covering film is broken at a temperature equal to or lower than the temperature T during molding, so that the thermosetting resin can be supplied. Accordingly, a process for boring the covering film with holes before molding, etc. is not required, and thus a molding method excellent in process characteristic can be employed.

In the present disclosure, the covering film usually forms a closed space. Accordingly, it is not necessary to bore the covering film with holes before molding, and a region in which the thermosetting resin exists can be brought into a closed space isolated from the outside environment by the covering film, so that leakage of an uncured resin does not occur, and thus a low-viscosity thermosetting resin can also be used. The closed space means a space surrounded by a covering film impermeable to a thermosetting resin at 25°C under atmospheric pressure, and the covering film forming the space may be bored with holes through which the thermosetting resin does not pass at 25°C under atmospheric pressure.

The form of the covering film is not limited, but the covering film is preferably in the form of a film, or in the form of a sheet such as a porous membrane. When a porous membrane is used as the covering film, a porous membrane having a pore size that does not allow the thermosetting resin to pass through the membrane in light of the viscosity of the thermosetting resin at 25°C is preferably used.

The thickness of the covering film is preferably 1 $\mu$m or more and 300 $\mu$m or less, more preferably 1 $\mu$m or more and 150 $\mu$m or less, particularly preferably 1 $\mu$m or more and 100 $\mu$m or less. When the thickness of the covering film is in the above-mentioned range, the handling characteristic is improved. The smaller the thickness of the covering film, the better because the holding amount of the thermosetting resin per thickness of the resin supply material 1 can be increased, i.e. the amount of the thermosetting resin that can be supplied per thickness of the resin supply material 1 increases as the thickness of the covering film decreases. In addition, the smaller the thickness of the covering film, the better because the value X at the temperature T decreases to facilitate breakage of the covering film as the thickness of the covering film decreases.

The method for measuring a thickness of the covering film is not particularly limited, and for example, the thickness can be measured using a micrometer, or by microscopic observation.

The ratio of the thermosetting resin to the closed space is preferably 90% or more, more preferably 95% or more, particularly preferably 98% or more. The amount of the thermosetting resin that can be supplied per volume of the resin supply material 1 increases as the ratio of the thermosetting resin to the closed space becomes higher. The smaller the number of gaps existing in the closed space, the better because defects such as voids can be more easily reduced in the resulting fiber-reinforced resin as the number of the vacant space decreases.

Generally, the temperature at which the viscosity of a thermosetting resin such as an epoxy resin changes to increase in a temperature elevation process is 100°C or higher and 200°C or lower. Accordingly, the melting point of the thermoplastic resin is preferably 100°C or higher and 200°C or lower. When the melting point of the thermoplastic resin is in the above-mentioned range, the covering film may be melted to be broken during molding, thus making it possible to supply the thermosetting resin. When melting point of the thermoplastic resin is in the above-mentioned range, thermal bonding such as heat sealing, impulse sealing, high-frequency bonding or ultrasonic bonding is facilitated, so that the resin supply material 1 can be produced at a low cost.

The main component of the thermoplastic resin may be a usual thermoplastic resin, and is not particularly limited, but a polyolefin, a polyamide or a polyester is preferably used from the viewpoint of moldability and flexibility. The main component mentioned here is a component that constitutes 70% by mass or more of the covering film. When the covering film has high flexibility, processing for covering a thermosetting resin with a covering film composed of a thermoplastic resin is facilitated, and the ratio of the thermosetting resin to the closed space formed by the covering film is easily increased.

The thermoplastic resin may further contain additives such as a filler and a plasticizer. Examples of the filler that is preferably used include inorganic fillers, and organic fillers which are not melted at the temperature T, and specific examples thereof may include mica, glass beads, silica, aluminum hydroxide, titanium oxide and alumina. By pressurizing the covering film at the time when the tensile strength of the covering film is reduced by temperature elevation during molding, the covering film may be easily broken with the filler as an initiation point. This effect is remarkable when a filler having an aspect ratio of 2 or more is used.

The aspect ratio of the filler is a ratio of the length of the major axis to the length of the minor axis of the filler, and can be determined by the following method. A sample obtained by dispersing a filler in a liquid such as water, and the casting the dispersion onto slide glass is observed with a laser microscope (e.g. VK-9500 manufactured by KEYENCE CORPORATION), and a length of the longest axis is measured for any filler, and defined as a major axis length. Next, for the same filler, a difference between focal depths on the upper surface of the slide glass and on the upper surface of the filler is measured, and defined as a minor axis length. The measured major axis is divided by the measured minor axis to determine a ratio of the former to the latter. For total 100 samples, the ratio of the major axis to the minor axis is determined in the same manner as described above, and an average of the obtained values is defined as an aspect ratio.

When the thermoplastic resin contains a plasticizer, it may be able to reduce the value X in the covering film at the temperature T.

In heating of the thermosetting resin at a temperature elevation rate of 1.5°C/minute from 30°C, the viscosity of the thermosetting resin at a temperature lower than the melting point of the thermoplastic resin by 20°C is preferably 100 Pa·s or less. When this viscosity is 100 Pa·s or less, the resin is quickly supplied to the base material 2.

The viscosity of the thermosetting resin at 40°C is preferably 0.01 Pa·s or more and 4000 Pa·s or less. When this viscosity is in the above-mentioned range, followability to a mold is improved, so that a three-dimensional complicated shape can be easily formed.

The kind of thermosetting resin for use in the present disclosure is not particularly limited, and examples of the thermosetting resin that is preferably used include epoxy resins, vinyl ester resins, phenol resins, thermosetting polyimide resins, polyurethane resins, urea resins, melamine resins and bismaleimide resins. In addition to a single epoxy resin, a copolymer of an epoxy resin and a thermosetting resin, a modified product, a resin obtained by blending two or more kinds of resins, and so on can be used.

Examples of the method for producing the resin supply material 1 of the present disclosure include the following method. A thermoplastic resin film formed into a tubular shape by a tubular film process is sealed on one side to prepare a bag closed at three sides. Such a bag can also be prepared by a method in which two thermoplastic resin films are superimposed on each other, and sealed on the sides except for a side serving as an opening for introduction of the thermosetting resin, or a method in which one thermoplastic resin film is folded, and sealed on the sides except for a side serving as an opening for introduction of the thermosetting resin. The thermosetting resin is introduced into the obtained bag, and the bag is sealed on the opening side to produce the resin supply material 1. When the thermosetting resin can be formed into a film, the thermosetting resin in the form of a film is sandwiched between thermoplastic resin films, and sealed at the end parts.

The method for sealing the film is not particularly limited, and examples thereof include a method using an adhesive, and heat sealing, impulse sealing, high-frequency bonding and ultrasonic bonding. The preform of the present disclosure includes the resin supply material 1 and the base material 2. Usually, the base material 2 does not contain a matrix resin, i.e. the base material is in a dry state.

Here, the preform means a laminate obtained by laminating and integrating the resin supply material 1 and the base material 2, and examples thereof may include a sandwich laminate in which an outermost layer of a laminate obtained by laminating and integrating a predetermined number of resin supply materials 1 is sandwiched between base materials 2; an alternating laminate in which resin supply materials 1 and base materials 2 are alternately laminated; and a combination thereof. Formation of a preform beforehand is preferred because the base material 2 can be quickly and more uniformly impregnated with the thermosetting resin in a process for production of a fiber-reinforced resin.

The base material 2 to be used in the preform in the present disclosure is a fiber base material composed of reinforcing fibers, and is a mat base material composed of reinforcing fibers. Specifically, a non-woven fabric formed of discontinuous fibers, or the like is preferably used.

For increasing the thermosetting resin impregnation rate to improve productivity of the fiber-reinforced resin, it is preferred that a mat base material composed of discontinuous fibers is used as the base material 2.

The number of filaments in one fiber bundle of continuous fibers to be used in the base material 2 in the present disclosure is preferably 500 or more, more preferably 1500 or more, still more preferably 2500 or more. The number of filaments in one fiber bundle is preferably 150000 or less, more preferably 100000 or less, still more preferably 70000 or less.

Examples of the method for producing a fiber-reinforced resin using the resin supply material 1 of the present disclosure include a method in which a fiber-reinforced resin is molded by heating and pressurizing the preform to supply a thermosetting resin from the resin supply material 1 to the base material 2. First, the preform 3 including the resin supply material 1 and the base material 2 is prepared, and set on a metal mold. The resin supply material 1 is softened on the metal mold at a high temperature, and the thermosetting resin is then supplied to the base material 2 by pressurization. The pressurization method is preferably press molding or vacuum-pressure molding. The temperature during supply of the resin and the temperature during curing may be the same, or different. A mold for molding may be a double-sided mold such as a closed mold composed of a rigid body, or a single-sided mold. In the case of the latter, the preform 3 can also be disposed between a flexible film and a rigid open mold (where the preform 3 is pressurized because a space between the flexible film and the rigid open mold is depressurized as compared to the outside as described above). Heating to a temperature at which the thermosetting resin is cured is performed after molding as necessary in addition to heating during molding, so that the thermosetting resin is cured to obtain a fiber-reinforced resin.

EXAMPLES

Hereinafter, the present disclosure will be described more in detail by way of reference examples.

<Materials>

[Thermoplastic Resin]

Thermoplastic Resin (1): 1700J (manufactured by Prime Polymer Co., Ltd., high-density polyethylene pellet, melting point: 135°C)
Thermoplastic Resin (2): CM4000 (manufactured by Toray Industries, Inc., terpolymerization polyamide resin (polyamide 6/66/610) pellet, melting point: 150°C)

Thermoplastic Resin (3): J106MG (manufactured by Prime Polymer Co., Ltd., polypropylene pellet, melting point: 165°C)

Thermoplastic Resin (4): UPILEX 125S (manufactured by Ube Industries, Ltd., polyimide film, melting point: none)

[Thermosetting Resin]

Epoxy Resin (1):

The epoxy resin (1) was prepared using 50 parts by mass of "Araldite (registered trademark)" MY0600 (manufactured by Huntsman Japan KK), 50 parts by mass of "EPICLON (registered trademark)" 830 (manufactured by DIC Corporation), 40 parts by mass of bis(4-aminophenyl)sulfone (manufactured by Tokyo Chemical Industry Co., Ltd.), 5 parts by mass of 3-hydroxy-2-naphthoic acid hydrazide (manufactured by Otsuka Chemical Co., Ltd.), and 30 parts by mass of SUMIKAEXCEL 5003P (manufactured by Sumitomo Chemical Company, Limited). The temperature T at which the viscosity of the epoxy resin (1) was minimum was 138°C, and the viscosity at 40°C was 2380 Pa·s. Using a reverse roll coater, the obtained epoxy resin (1) obtained was applied onto a release paper to prepare epoxy resin films with masses per unit area of 100 $g/m^2$ and 37 $g/m^2$, respectively. Here, any of these films was laminated according to a purpose, so that the mass per unit area of the film was changed.

Epoxy Resin (2):

The epoxy resin (2) was prepared using 6 parts by mass of "jER (registered trademark) " 630 (manufactured by Mitsubishi Chemical Corporation), 19 parts by mass of "EPON (registered trademark)" 825 (manufactured by Mitsubishi Chemical Corporation), 15 parts by mass of diglycidyl aniline (manufactured by Nippon Kayaku Co. , Ltd.), 60 parts by mass of "Kane Ace (registered trademark)" MX-416 (manufactured by Kaneka Corporation), 31 parts by mass of "jERCURE (registered trademark) W, and 1 part by mass of DIC-TBC (manufactured by DIC Corporation). The temperature T at which the viscosity of the epoxy resin (2) was minimum was 110°C, and the viscosity at 40°C was 5.6 Pa·s.

[Base Material]

Carbon Fiber Fabric (1): CO6343B (manufactured by Toray Industries, Inc., plain fabric, weight per unit area: 198 $g/m^2$) .

[Filler]

Filler (1)

Industrial Mica Powder A-21S (brand name) (manufactured by YAMAGUCHI MICA CO., LTD., mean particle size: 23 $\mu$m, aspect ratio: 70)

<Method for Producing Resin Supply Material>

(Reference Example 1a)

Using pellets of the thermoplastic resin (1), a 10 cm-wide tubular film was produced by a tubular film formation process, and cut to a length of 12 cm. The film had a thickness of 87 $\mu$m . The tubular film was heat-sealed at a position of 1 cm from one of the openings to obtain a bag. 6.74 g of the epoxy resin (2) was introduced into the obtained bag, and the bag was heat-sealed at a position of 1 cm from the other opening to obtain a resin supply material (1) . The resin supply material (1) was in the form of a sheet, and had a thickness of 0.74 mm.

(Reference Example 2a)

Using pellets of the thermoplastic resin (3), a 10 cm-wide tubular film was produced by a tubular film formation process, and cut to a length of 12 cm. The film had a thickness of 93 $\mu$m . The tubular film was heat-sealed at a position of 1 cm from one of the openings to obtain a bag. 6.74 g of the epoxy resin (2) was introduced into the obtained bag, and the bag was heat-sealed at a position of 1 cm from the other opening to obtain a resin supply material (2) . The resin supply material (2) was in the form of a sheet, and had a thickness of 0.75 mm.

(Reference Example 3a)

Using pellets of the thermoplastic resin (1), a 10 cm-wide tubular film was produced by a tubular film formation process, and cut to a length of 12 cm. The film had a thickness of 87 $\mu$m . The tubular film was heat-sealed at a position of 1 cm from one of the openings to obtain a bag. The epoxy resin (1) (674 g/m$^2$) having a size of 10 cm × 10 cm was introduced into the obtained bag, and the bag was heat-sealed at a position of 1 cm from the other opening to obtain a resin supply material (3) . The resin supply material (3) was in the form of a sheet, and had a thickness of 0.74 mm.

(Reference Example 4a)

Using pellets of the thermoplastic resin (2), a film was produced by a press machine, and cut to a size of 12 cm × 12 cm. The film had a thickness of 128 $\mu$m. The epoxy resin (1) (674 g/m$^2$) having a size of 10 cm × 10 cm was sandwiched between the films obtained by cutting a film produced from the thermoplastic resin (2). Here, the epoxy resin film was disposed so as to lie at the center of the film obtained by cutting a film produced from the thermoplastic resin (2) . The obtained laminate was heat-sealed at a position of 1 cm from the end on each of the four sides to obtain a resin supply material (4) . The resin supply material (4) was in the form of a sheet, and had a thickness of 0.82 mm.

(Reference Example 5a)

5 parts by mass of the filler (1) was mixed with 100 parts by mass of pellets of the thermoplastic resin (2) using a twin screw extruder (manufactured by The Japan Steel Works, LTD.), and the mixture was formed into pellets of about 3 mm using a pelletizer for strands. Using the obtained pellets, a film was produced by a press machine, and cut to a size of 12 cm × 12 cm. The film had a thickness of 130 $\mu$m. The epoxy resin (1) (674 g/m$^2$) having a size of 10 cm × 10 cm was sandwiched between the films obtained by cutting a film produced from the thermoplastic resin (2) and the filler (1). Here, the epoxy resin film was disposed so as to lie at the center of the film obtained by cutting a film produced from the thermoplastic resin (2) and the filler (1). The obtained laminate was heat-sealed at a position of 1 cm from the end on each of the four sides to obtain a resin supply material (5). The resin supply material (5) was in the form of a sheet, and had a thickness of 0.82 mm.
In Reference Examples 1a to 5a, the resin supply material was easily prepared.

(Comparative Example 1a)

The thermoplastic resin (4) was cut to a size of 12 cm × 12 cm. The film had a thickness of 127 $\mu$m. The two films thus obtained were laminated, and heat-sealed at a position of 1 cm from the end on each of three sides using a sealable polyimide resin, so that a bag was obtained. 6. 74 g of the epoxy resin (2) was introduced into the obtained bag, and the bag was heat-sealed at a position of 1 cm from the end on the unsealed side using a sealable polyimide film, so that a resin supply material (6) was obtained. The resin supply material (6) was in the form of a sheet, and had a thickness of 0.82 mm.

(Comparative Example 2a)

The thermoplastic resin (4) was cut to a size of 12 cm × 12 cm. The epoxy resin (1) (674 g/m$^2$) having a size of 10 cm × 10 cm was sandwiched between the films obtained by cutting a film produced from the thermoplastic resin (4). Here, the epoxy resin film was disposed so as to lie at the center of the film obtained by cutting a film produced from the thermoplastic resin (4) . The obtained laminate was heat-sealed at a position of 0.5 cm from the end on each of the four sides using a sealable polyimide film, so that a resin supply material (7) was obtained. The resin supply material (7) was in the form of a sheet, and had a thickness of 0.82 mm. UPILEX 125S had high rigidity, and was thus difficult to dispose along the laminate of the epoxy resin film, so that the heat sealing position sifted outward as compared to the resin supply materials (1) to (6).

(Comparative Example 3a)

The thermoplastic resin (4) was subjected to perforation processing to provide holes with a diameter of 1 mm at intervals of 4 mm. The film was cut to a size of 12 cm × 12 cm. The two films thus obtained were laminated, and heat-sealed at a position of 1 cm from the end on each of three sides using a sealable polyimide resin, so that a bag was obtained. The epoxy resin (2) was introduced into the obtained bag. However, the epoxy resin (2) was leaked out through the holes, and thus it was difficult to obtain a resin supply material.

<Method for Measuring Thickness (Film Thickness) of Covering Film Composed of Thermoplastic Resin>

A film composed of a thermoplastic resin, which was to be used as a covering film, was cut to a size of 10 cm × 10 cm, the thickness of the film was measured at five points: the center and the four corners, and an average of the measured values was calculated. In the case of a tubular film, the film was cut open to eliminate overlaps, and measured. Measurement results are described in Table 3.

<Method for Measuring Thickness of Resin Supply Material>

A resin supply material placed on a stage in a compression tester (5582 Floor Type Universal Testing System, manufactured by Instron) was pressed with an indenter so as to apply a load of 0.01 N to the resin supply material. A distance between the upper surface of the stage and the lower surface of the indenter in this state was defined as a thickness. Measurement results are described in Table 3.

<Aspect Ratio of Filler>

A sample obtained by dispersing a filler in water, and the casting the dispersion onto slide glass was observed with a laser microscope (VK-9500 manufactured by KEYENCE CORPORATION), and a length of the longest axis was measured for any filler, and defined as a major axis length. Next, for the same filler, a difference between focal depths on the upper surface of the slide glass and on the upper surface of the filler was measured, and defined as a minor axis length. The measured major axis was divided by the measured minor axis to determine a ratio of the former to the latter. For total 100 samples, the ratio of the major axis to the minor axis was determined in the same manner as described above, and an average of the obtained values was defined as an aspect ratio.

<Method for Measuring Ratio of Thermosetting Resin to Closed Space in Resin Supply Material>

(1) A density (a) of a film composed of a thermoplastic resin is measured in accordance with JIS-K-7112 (1999) Method A.
(2) An apparent density (b) of a thermosetting resin is measured in accordance with JIS-K-6911 (1995).
(3) A density (A) of a resin supply material is measured in accordance with JIS-K-7112 (1999) Method A.
(4) A mass $M_A$ of the resin supply material, and masses $M_a$ and $M_b$, respectively, of the thermoplastic resin and the thermosetting resin that form the resin supply material are measured using a balance.

A ratio of the thermosetting resin to a closed space is calculated from the following formulae (I) to (V).

$$V_A = M_A/\text{density (A)} \quad \cdots \quad (I)$$

$$V_a = M_a/\text{density (a)} \quad \cdots \quad (II)$$

$$V_b = M_b/\text{apparent density (b)} \quad \cdots \quad (III)$$

$$V_c = V_A - V_a \quad \cdots \quad (IV)$$

$$\alpha(\%) = V_b/V_c \times 100 \quad \cdots \quad (V)$$

$V_c$: volume of closed space
$\alpha$: ratio of thermosetting resin to closed space

The calculated ratios (%) are described in Table 3.

<Method for Measuring Viscosity of Thermosetting Resin>

A viscosity of the thermosetting resin was measured under the following conditions. A dynamic elasticity measurement apparatus ARES-2KFRTN1-FCO-STD (manufactured by TA Instruments) was used, and flat parallel plates with a diameter of 40 mm were used as upper and lower measurement tools. The thermosetting resin was set in such a manner that a distance between the upper and lower tools was 1 mm, and the viscosity was measured in a twist mode (measurement frequency: 0.5 Hz) at a temperature elevation rate of 1.5°C/minute with the measurement start temperature set to 30°C.

The temperature at which the measured resin viscosity was minimum was set to T (°C). The temperature T (°C) and the viscosity of the thermosetting resin at a temperature lower than the melting point of the thermoplastic resin by 20°C as obtained in this measurement are described in Table 3. In Table 3, the viscosity of the thermosetting resin (b) at a temperature lower than the melting point of the thermoplastic resin by 20°C is abbreviated as "viscosity of thermosetting resin".

<Method for Measuring Melting Point of Thermoplastic Resin>

A melting point of the thermoplastic resin was measured using a differential scanning calorimeter Q2000 (manufactured by TA Instruments) in accordance with JIS-K-7121 (1987). Measurement results are described in Table 3.

<Method for Tension Test of Covering Film >

A tension test was conducted using a tension tester (5565 Floor Type Universal Testing System, manufactured by Instron) in accordance with JIS K7127 (1999). The tension test was conducted at 25°C and at the temperature T (°C) (e.g. 110°C for the epoxy resin (1) and 138°C for the epoxy resin (2)). When the tension test was conducted at the temperature T (°C), a test piece was set in a thermostatic bath with the inside temperature set to T (°C), and the test piece was then left standing for 5 minutes, followed by conducting the tension test. A tensile load F at a yield point was divided by a test piece width W to obtain a value X. When the tensile load F was not above the detection limit of the tester, it was determined that measurement was impossible, and the value X was evaluated as being less than 0.01 N/mm.

Measurement results are described in Table 3.

<Evaluation of Moldability>

A sample with which a properly impregnated fiber-reinforced resin was obtained after the molding process was rated o, and a sample with which a fiber-reinforced resin was not obtained because the thermosetting resin was not supplied from the resin supply material to the base material was rated x. Evaluation results are described in Table 4.

(Reference Example 6a)

The following molding process was carried out using the resin supply material obtained by the above-mentioned method, and the base material.

(1) Two base material layers (size: 10 cm × 10 cm) are disposed on each of front and back surfaces of the resin supply material (1) (size: 10 cm × 12 cm). Here, the base material is disposed at the center of the resin supply material (1).
(2) The laminate in the step (1) is preheated at zero pressure and 70°C for about 10 minutes using a press machine.
(3) The laminate is pressurized at 1 MPa.
(4) The laminate is heated to 150°C at a rate of 3°C/minute, and then held for 40 minutes to be cured.

The epoxy resin (2) was supplied from the resin supply material to the base material to obtain a properly impregnated fiber-reinforced resin.

(Reference Example 7a)

Except that the resin supply material (2) was used, the same molding process as in Reference Example 6a was carried out. The epoxy resin (2) was supplied from the resin supply material to the base material to obtain a properly impregnated fiber-reinforced resin.

(Reference Example 8a)

The following molding process was carried out using the resin supply material obtained by the above-mentioned method, and the base material.

(1) Two base material layers (size: 10 cm × 10 cm) are disposed on each of front and back surfaces of the resin supply material (3) (size: 10 cm × 12 cm). Here, the base material is disposed at the center of the resin supply material (1).
(2) The laminate in the step (1) is preheated at zero pressure and 130°C for about 10 minutes using a press machine.
(3) The laminate is pressurized at 1 MPa.
(4) The laminate is heated to 180°C at a rate of 3°C/minute, and then held for 40 minutes to be cured.

The epoxy resin (1) was supplied from the resin supply material to the base material to obtain a properly impregnated fiber-reinforced resin.

(Reference Example 9a)

The following molding process was carried out using the resin supply material obtained by the above-mentioned method, and the base material.

(1) Two base material layers (size: 10 cm × 10 cm) are disposed on each of front and back surfaces of the resin supply material (4) (size: 12 cm × 12 cm). Here, the base material is disposed at the center of the resin supply material (4).

Subsequently, the same steps as the steps (2) to (4) in the molding process in Reference Example 8a are carried out. The epoxy resin (1) was supplied from the resin supply material to the base material to obtain a properly impregnated fiber-reinforced resin.

(Reference Example 10a)

Except that the resin supply material (5) was used, the same molding process as in Reference Example 9a was carried out. The epoxy resin (1) was supplied from the resin supply material to the base material to obtain a properly impregnated fiber-reinforced resin.

(Reference Example 11a)

The following molding process was carried out using the resin supply material obtained by the above-mentioned method, and the base material.

(1) Two base material layers (size: 10 cm × 10 cm) are disposed on each of front and back surfaces of the resin supply material (1) (size: 10 cm × 12 cm). Here, the base material is disposed at the center of the resin supply material (1), and thus a preform is prepared.
(2) The preform prepared in the step (1) is disposed on a metal plate, and covered with a film, and the metal plate and the film are sealed, and a space covered by the film is brought into a vacuum state ($10^{-1}$ Pa) using a vacuum pump.
(3) The preform is put in a dryer with the inside temperature adjusted to 70°C while the preform is kept in the above-mentioned state, and preheating is performed for 10 minutes.
(4) The preform is heated to 150°C at a rate of 3°C/minute, and then held for 40 minutes to be cured.

The epoxy resin (2) was supplied from the resin supply material to the base material to obtain a properly impregnated fiber-reinforced resin.
In Reference Examples 6a to 11a, the preform was easily prepared. In Reference Example 11a, the material was confirmed to be suitable for a molding method capable of molding even a complicated shape at a low pressure as in vacuum-pressure molding. By using such a material, a fiber-reinforced resin was easily produced without use of additional subsidiary materials.

(Comparative Example 4a)

The following molding process was carried out using the resin supply material obtained by the above-mentioned method, and the base material.

(1) Two base material layers (size: 10 cm × 10 cm) are disposed on each of front and back surfaces of the resin supply material (6) (size: 12 cm × 12 cm). Here, the base material is disposed at the center of the resin supply material (6).

Subsequently, the same steps as the steps (2) to (4) in the molding process in Example 6 are carried out.

As a result, the epoxy resin (2) was not supplied from the resin supply material to the base material, and thus a fiber-reinforced resin was not obtained. Specifically, a cured product of the epoxy resin (2) covered with UPILEX, and a dry base material were obtained.

(Comparative Example 5a)

Except that the resin supply material (7) was used, the same molding process as in Reference Example 9 was carried out. As a result, the epoxy resin (1) was not supplied from the resin supply material to the base material, and thus a fiber-reinforced resin was not obtained. Specifically, a cured product of the epoxy resin (1) covered with UPILEX, and a dry base material were obtained.

[Table 3]

| | Thermoplastic Resin | Film thickness (mm) | Thermosetting resin | Melting point of thermoplastic resin (°C) | X (=F/W) (N/mm) at 25°C | X (=F/W) (N/mm) at temperature T | Viscosity of thermosetting resin (Pa·s) | Ratio of thermosetting resin to closed space (%) | Temperature T (°C) | Thickness of resin supply material (mm) | Holding amount of thermosetting resin per thickness of resin supply material (g/mm) |
|---|---|---|---|---|---|---|---|---|---|---|---|
| Example 1a | Thermoplastic Resin (1) | 0.087 | Epoxy resin (2) | 135 | 2.3 | 0.4 | 10.5 | 98 | 110 | 0.74 | 9.11 |
| Example 2a | Thermoplastic Resin (3) | 0.093 | Epoxy resin (2) | 165 | 4.3 | 0.1 | 1.0 | 98 | 110 | 0.75 | 8.99 |
| Example 3a | Thermoplastic Resin (1) | 0.087 | Epoxy resin (1) | 135 | 2.3 | less than 0.01 | 0.4 | 96 | 138 | 0.74 | 9.11 |
| Example 4a | Thermoplastic Resin (2) | 0.128 | Epoxy resin (1) | 150 | 4.4 | 0.7 | 0.6 | 96 | 138 | 0.82 | 8.22 |
| Example 5a | Thermoplastic Resin (2) + Filler (1) | 0.13 | Epoxy resin (1) | 150 | 3.5 | 0.2 | 0.6 | 96 | 138 | 0.82 | 7.81 |
| Comparative Example 1a | Thermoplastic Resin (4) | 0.127 | Epoxy resin (2) | None | 29.5 | 21.9 | - | 97 | 110 | 0.82 | 8.22 |
| Comparative Example 2a | Thermoplastic Resin (4) | 0.127 | Epoxy resin (1) | None | 29.5 | 21.4 | - | 88 | 138 | 0.82 | 8.22 |

[Table 4]

|  | Resin supply material | Molding method | Moldability |
|---|---|---|---|
| Example 6a | (1)[Example 1a] | Press | ○ |
| Example 7a | (2)[Example 2a] | Press | ○ |
| Example 8a | (3)[Example 3a] | Press | ○ |
| Example 9a | (4)[Example 4a] | Press | ○ |
| Example 10a | (5) [Example 5a] | Press | ○ |
| Example 11a | (1)[Example 1a] | Vacuum-pressure | ○ |
| Comparative Example 4a | (6)[Comparative Example 1a] | Press | × |
| Comparative Example 5a | (7)[Comparative Example 2a] | Press | × |

INDUSTRIAL APPLICABILITY

A resin supply material of the present invention, and a method for producing a fiber-reinforced resin using the resin supply material are suitably used in sport applications, general industrial applications and aerospace applications. More specifically, the general industrial applications include electronic device members and repairing/reinforcing materials, such as structural materials and sub-structural materials for automobiles, watercrafts, windmills and so on, roof materials, and cases (housings) for IC trays and notebook personal computers. The aerospace applications include structural materials and sub-structural materials for aircrafts, rockets and artificial satellites.

DESCRIPTION OF REFERENCE SIGNS

1: Resin supply material
2: Base material
3: Preform

**Claims**

1. A resin supply material (1) suitable for molding a fiber-reinforced resin, the resin supply material comprising reinforcing fibers and the resin, the reinforcing fibers are discontinuous fibers which are in the form of a web in which discontinuous fibers are dispersed in a bundle shape or a monofilament shape, and gaps to be impregnated with a resin exist between the discontinuous fibers, and the discontinuous fibers in the web are bonded together by a binder,

   wherein a fiber volume content Vfi of the reinforcing fibers as expressed by the following formula (II) is 20% or less

   $$Vfi = Vf1/Vp1 \times 100 \; (\%) \cdot \cdot \cdot \; (II)$$

   $Vf1$: fiber volume ($mm^3$) in resin supply material
   $Vp1$: volume ($mm^3$) of resin supply material, and wherein a fiber weight content Wfi of the reinforcing fibers as expressed by the following formula (I) is 30% or less.

   $$Wfi = Wf1/(Wf1 + Wr1) \times 100 \; (\%) \qquad (I)$$

   $Wf1$: fiber weight (g) in resin supply material
   $Wr1$: resin weight (g) in resin supply material.

2. The resin supply material according to claim 1, wherein the reinforcing fibers form a web having a compressive stress of 5 kPa or more at a porosity of 90%.

3. The resin supply material according to any one of claims 1 to 2, wherein an average of fiber two-dimensional orientation angles on a plane orthogonal to the X-Y plane of the reinforcing fibers is 5 to 85 degrees, wherein the average of fiber two-dimensional orientation angles on a plane to the X-Y plane is measured in the following steps I and II

I Fiber two-dimensional orientation angles of randomly selected reinforcing fiber monofilaments on a plane orthogonal to the X-Y plane are measured; The fiber two-dimensional orientation angle is set to 0 degree when parallel to the Z axis, and to 90 degrees when vertical to the Z axis; Accordingly, the fiber two-dimensional orientation angle ranges from 0 degree to 90 degrees;
II The measurement in the step I is performed for total 50 reinforcing fiber monofilaments, and an average of the measured values is calculated as an average of fiber two-dimensional orientation angles on a plane orthogonal to the X-Y plane.

4. The resin supply material according to any one of claims 1 to 3, wherein an average of fiber two-dimensional orientation angles on the X-Y plane of the reinforcing fibers is 5 degrees or more, wherein the average of fiber two-dimensional orientation angles on the X-Y plane is measured in the following steps I and II

I An average of two-dimensional orientation angles with all reinforcing fiber monofilaments orthogonally crossing randomly selected reinforcing fiber monofilaments on the X-Y plane is measured; If there are many reinforcing fiber monofilaments crossing the reinforcing fiber monofilaments, an average measured for randomly selected 20 crossing reinforcing fiber monofilaments may be used alternatively;
II The measurement in the step I is repeated five times for other reinforcing fiber monofilaments, and an average of the measured values is calculated as an average of fiber two-dimensional orientation angles.

5. The resin supply material according to any one of claims 1 to 4, wherein the reinforcing fiber is at least one selected from a glass fiber, a carbon fiber, an aramid fiber and a metal fiber.

6. The resin supply material according to any one of claims 1 to 5, wherein the reinforcing fibers have a mean fiber length of 0.1 to 100 mm.

7. A preform (3) which is formed by laminating and integrating the resin supply material (1) according any one of claims 1 to 6 and a base material (2) .

8. The preform according to claim 7, wherein the base material is at least one selected from a fabric base material, a unidirectional base material and a mat base material each composed of reinforcing fibers.

9. A method for producing a fiber-reinforced resin, the method comprising molding a fiber-reinforced resin by heating and pressurizing the preform according to claim 7 or 8 to supply the resin from the resin supply material to the base material.

**Patentansprüche**

1. Ein Harzausgangsmaterial (1), geeignet zum Formen eines faserverstärkten Harzes, wobei das Harzausgangsmaterial Verstärkungsfasern und das Harz umfasst, wobei die Verstärkungsfasern diskontinuierliche Fasern sind, die in Form eines Gewebes vorliegen, in dem diskontinuierliche Fasern in einer Bündelform oder einer Monofilamentform verteilt sind und in dem mit einem Harz zu imprägnierende Zwischenräume zwischen den diskontinuierlichen Fasern vorliegen, und wobei die diskontinuierlichen Fasern im Gewebe durch ein Bindemittel miteinander verbunden sind,

wobei ein Faservolumengehalt Vfi der Verstärkungsfasern, ausgedrückt durch die folgende Formel (II), 20% oder weniger beträgt

$$Vfi = Vf1/Vp1 \times 100 \ (\%) \ (II)$$

Vf1: Faservolumen (mm$^3$) im Harzausgangsmaterial

Vp1: Volumen (mm$^3$) des Harzausgangsmaterials, und
wobei ein Fasergewichtsgehalt Wfi der Verstärkungsfasern, ausgedrückt durch die folgende Formel (I), 30 % oder weniger beträgt.

$$Wfi = Wf1/(Wf1 + Wr1) \times 100 (\%) \quad (I)$$

Wf1: Fasergewicht (g) im Harzausgangsmaterial
Wr1: Gewicht des Harzes (g) im Harzausgangsmaterial.

2. Das Harzausgangsmaterial gemäß Anspruch 1, wobei die Verstärkungsfasern ein Gewebe mit einer Druckspannung von 5 kPa oder mehr bei einer Porosität von 90 % bilden.

3. Das Harzausgangsmaterial gemäß einem der Ansprüche 1 bis 2, wobei ein Mittelwert von zweidimensionalen Faserorientierungswinkeln in einer Ebene orthogonal zu der X-Y-Ebene der Verstärkungsfasern 5 bis 85 Grad beträgt, wobei der Mittelwert der zweidimensionalen Faserorientierungswinkel in einer Ebene orthogonal zu der X-Y-Ebene in den folgenden Schritten I und II gemessen wird

I Zweidimensionale Faserorientierungswinkel zufällig ausgewählter Verstärkungsfaser-Monofilamente in einer Ebene orthogonal zur X-Y-Ebene werden gemessen; der zweidimensionale Faserorientierungswinkel wird auf 0 Grad gesetzt, wenn er parallel zur Z-Achse ist, und auf 90 Grad, wenn er senkrecht zur Z-Achse ist; dementsprechend reicht der zweidimensionale Faserorientierungswinkel von 0 Grad bis 90 Grad;
II Die Messung in Schritt I wird für insgesamt 50 Verstärkungsfaser-Monofilamente durchgeführt und ein Mittelwert der gemessenen Werte wird als Mittelwert der zweidimensionalen Faserorientierungswinkel in einer Ebene orthogonal zur X-Y-Ebene berechnet.

4. Das Harzausgangsmaterial gemäß einem der Ansprüche 1 bis 3, wobei ein Mittelwert von zweidimensionalen Faserorientierungswinkeln in der X-Y-Ebene der Verstärkungsfasern 5 Grad oder mehr beträgt, wobei der Mittelwert der zweidimensionalen Faserorientierungswinkel in der X-Y-Ebene in den folgenden Schritten I und II gemessen wird

I Ein Mittelwert der zweidimensionalen Orientierungswinkel mit allen Verstärkungsfaser-Monofilamenten, die zufällig ausgewählte Verstärkungsfasermonofilamente in der X-Y-Ebene orthogonal kreuzen, wird gemessen; wenn es viele Verstärkungsfaser-Monofilamente gibt, die die Verstärkungsfaser-Monofilamente kreuzen, kann alternativ ein Mittelwert verwendet werden, der für zufällig ausgewählte 20 kreuzende Verstärkungsfaser-Monofilamente gemessen wird;
II Die Messung in Schritt I wird fünfmal für andere Verstärkungsfaser-Monofilamente wiederholt und ein Mittelwert der gemessenen Werte wird als Mittelwert der zweidimensionalen Orientierungswinkel der Fasern berechnet.

5. Das Harzausgangsmaterial gemäß einem der Ansprüche 1 bis 4, wobei die Verstärkungsfaser mindestens eine ist, die aus einer Glasfaser, einer Kohlenstofffaser, einer Aramidfaser und einer Metallfaser ausgewählt ist.

6. Das Harzausgangsmaterial gemäß einem der Ansprüche 1 bis 5, wobei die Verstärkungsfasern eine mittlere Faserlänge von 0,1 bis 100 mm aufweisen.

7. Ein Vorformling (3), der durch Laminieren und Integrieren des Harzausgangsmaterials (1) gemäß einem der Ansprüche 1 bis 6 und eines Grundmaterials (2) gebildet wird.

8. Der Vorformling gemäß Anspruch 7, wobei das Basismaterial mindestens eines ist, das ausgewählt ist aus einem Textilbasismaterial, einem unidirektionalen Basismaterial und einem Gewebebasismaterial, die jeweils aus Verstärkungsfasern bestehen.

9. Ein Verfahren zur Herstellung eines faserverstärkten Harzes, wobei das Verfahren das Formen eines faserverstärkten Harzes durch Erhitzen und Druckbeaufschlagung des Vorformlings gemäß Anspruch 7 oder 8 umfasst, um das Harz aus dem Harzausgangsmaterial dem Basismaterial zuzuführen.

**Revendications**

1. Matériau d'alimentation en résine (1) adapté au moulage d'une résine renforcée de fibres, le matériau d'alimentation en résine comprenant des fibres de renforcement et la résine, les fibres de renforcement sont des fibres discontinues qui se présentent sous la forme d'un voile dans lequel des fibres discontinues sont dispersées en une forme de faisceau ou une forme de monofilament, et des espaces à imprégner avec une résine existent entre les fibres discontinues, et les fibres discontinues dans le voile sont liées ensemble par un liant, dans lequel une teneur en volume de fibres Vfi des fibres de renforcement telle qu'exprimée par la formule (II) suivante est de 20 % ou moins

   $Vfi = Vf1/Vp1 \times 100$ (%) · · · (II)

   Vf1 : volume des fibres ($mm^3$) dans le matériau d'alimentation en résine
   Vp1 : volume ($mm^3$) de matériau d'alimentation en résine, et dans lequel une teneur pondérale en fibres Wfi des fibres de renforcement telle qu'exprimée par la formule (I) suivante est de 30 % ou moins.

   $$Wfi = Wf1/(Wf1 + Wrl) \times 100 \text{ (%)} \qquad \text{(I)}$$

   Wf1 : poids des fibres (g) dans le matériau d'alimentation en résine
   Wr1 : poids de la résine (g) dans le matériau d'alimentation en résine.

2. Matériau d'alimentation en résine selon la revendication 1, dans lequel les fibres de renforcement forment un voile présentant une contrainte de compression de 5 kPa ou plus à une porosité de 90 %.

3. Matériau d'alimentation en résine selon l'une quelconque des revendications 1 à 2, dans lequel une moyenne d'angles d'orientation bidimensionnelle de fibres sur un plan orthogonal au plan X-Y des fibres de renforcement est de 5 à 85 degrés, dans lequel la moyenne d'angles d'orientation bidimensionnelle de fibres sur un plan par rapport au plan X-Y est mesurée dans les étapes I et II suivantes

   I Des angles d'orientation bidimensionnelle de fibres de monofilaments de fibres de renforcement sélectionnés aléatoirement sur un plan orthogonal au plan X-Y sont mesurés ; l'angle d'orientation bidimensionnelle de fibres est défini sur 0 degré lorsqu'il est parallèle à l'axe Z et sur 90 degrés lorsqu'il est perpendiculaire à l'axe Z ; en conséquence, l'angle d'orientation bidimensionnelle de fibres se situe dans une plage de 0 degré à 90 degrés ;
   II La mesure à l'étape I est effectuée pour un total de 50 monofilaments de fibres de renforcement, et une moyenne des valeurs mesurées est calculée comme une moyenne des angles d'orientation bidimensionnelle de fibres sur un plan orthogonal au plan X-Y.

4. Matériau d'alimentation en résine selon l'une quelconque des revendications 1 à 3, dans lequel une moyenne d'angles d'orientation bidimensionnelle de fibres sur le plan X-Y des fibres de renforcement est de 5 degrés ou plus, dans lequel la moyenne d'angles d'orientation bidimensionnelle de fibres sur le plan X-Y est mesurée dans les étapes I et II suivantes

   I Une moyenne des angles d'orientation bidimensionnelle avec tous les monofilaments de fibres de renforcement croisant orthogonalement des monofilaments de fibres de renforcement sélectionnés aléatoirement sur le plan X-Y est mesurée ; s'il y a de nombreux monofilaments de fibres de renforcement croisant les monofilaments de fibres de renforcement, une moyenne mesurée pour 20 monofilaments de fibres de renforcement croisés sélectionnés aléatoirement peut être utilisée à la place ;
   II La mesure à l'étape I est répétée cinq fois pour d'autres monofilaments de fibres de renforcement, et une moyenne des valeurs mesurées est calculée comme une moyenne des angles d'orientation bidimensionnelle de fibres.

5. Matériau d'alimentation en résine selon l'une quelconque des revendications 1 à 4, dans lequel la fibre de renforcement est au moins une fibre sélectionnée parmi une fibre de verre, une fibre de carbone, une fibre d'aramide et une fibre métallique.

6. Matériau d'alimentation en résine selon l'une quelconque des revendications 1 à 5, dans lequel les fibres de renforcement ont une longueur de fibre moyenne de 0,1 à 100 mm.

7. Préforme (3) qui est formée en laminant et en intégrant (1) le matériau d'alimentation en résine (1) selon l'une quelconque des revendications 1 à 6 et un matériau de base (2).

8. Préforme selon la revendication 7, dans laquelle le matériau de base est au moins un matériau sélectionné parmi un matériau de base de tissu, un matériau de base unidirectionnel et un matériau de base de mat, chacun composé de fibres de renforcement.

9. Procédé de production d'une résine renforcée de fibres, le procédé comprenant le moulage d'une résine renforcée de fibres en chauffant et pressurisant la préforme selon la revendication 7 ou 8 pour alimenter la résine du matériau d'alimentation en résine au matériau de base.

[Fig. 1]

**EP 3 263 332 B1**

**REFERENCES CITED IN THE DESCRIPTION**

**Patent documents cited in the description**

- JP 2003071856 A
- JP 2003011231 A
- JP 2002234078 A
- JP 2006305867 A
- JP 2008246981 A
- JP 2004099731 A
- EP 2674447 A1
- JP 2014148111 A
- EP 2990185 A1
- WO 2014103658 A